# EUROPEAN PATENT SPECIFICATION

(11) **EP 2 777 262 B1**
(45) Date of publication and mention of the grant of the patent: **17.10.2018**
(21) Application number: 12788056.5
(22) Date of filing: 07.11.2012
(51) Int. Cl.: H04N 19/52, H04N 19/46, H04N 19/109, H04N 19/119, H04N 19/147, H04N 19/154, H04N 19/176, H04N 19/96

(54) **GENERATING ADDITIONAL MERGE CANDIDATES**
ERZEUGUNG ZUSÄTZLICHER ZUSAMMENFÜHRUNGS-KANDIDATEN
GÉNÉRATION DE CANDIDATS À LA FUSION SUPPLÉMENTAIRES

(30) Priority: 07.11.2011 US 201161556746 P; 21.11.2011 US 201161562284 P; 22.11.2011 US 201161562940 P; 06.11.2012 US 201213669992
(43) Date of publication of application: 17.09.2014
(73) Proprietor: QUALCOMM INCORPORATED, San Diego, California 92121-1714 (US)
(72) Inventor: ZHENG, Yunfei, San Jose California 95131 (US); WANG, Xianglin, San Diego California 92121 (US); KARCZEWICZ, Marta, San Diego California 92121 (US)
(74) Representative: Loveless, Ian Mark
(86) International application number: PCT/US2012/063932
(87) International publication number: WO 2013/070757

(56) References cited:
- EP-A2- 2 723 076
- SUGIO T ET AL: "Parsing Robustness for Merge/AMVP", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F470, 22 July 2011 (2011-07-22), XP030009493,
- FUJIBAYASHI (NTT DOCOMO) A ET AL: "CE9: 3.2d Simplified motion vector prediction", 95. MPEG MEETING; 24-1-2011 - 28-1-2011; DAEGU; (MOTION PICTURE EXPERT GROUP OR ISO/IEC JTC1/SC29/WG11),, no. m18991, 15 January 2011 (2011-01-15), XP030047560,
- CHEN J ET AL: "MVP index parsing with fixed number of candidates", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F402, 12 July 2011 (2011-07-12), XP030009425,
- JUNG J ET AL: "Description of Core Experiment CE13: Motion data parsing robustness and throughput", 97. MPEG MEETING; 18-7-2011 - 22-7-2011; TORINO; (MOTION PICTURE EXPERT GROUP OR ISO/IEC JTC1/SC29/WG11),, no. m21437, 22 July 2011 (2011-07-22), XP030050000,
- ZHENG Y ET AL: "Non-CE13: Simplification and improvement of additional merge candidate", 7. JCT-VC MEETING; 98. MPEG MEETING; 21-11-2011 - 30-11-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-G683, 9 November 2011 (2011-11-09), XP030110667,

## Description

This application claims the benefit of:
U.S. Provisional Application No. 61/556,746 filed 07 November 2011;
U.S. Provisional Application No. 61/562,284 filed 21 November 2011; and
U.S. Provisional Application 61/562,940 filed 22 November 2011.

### TECHNICAL FIELD

This disclosure relates to video coding and, more particularly, to merge mode prediction of video data.

### BACKGROUND

Digital video capabilities can be incorporated into a wide range of devices, including digital televisions, digital direct broadcast systems, wireless broadcast systems, personal digital assistants (PDAs), laptop or desktop computers, digital cameras, digital recording devices, digital media players, video gaming devices, video game consoles, cellular or satellite radio telephones, video teleconferencing devices, and the like. Digital video devices implement video compression techniques, such as those described in the standards defined by MPEG-2, MPEG-4, ITU-T H.263, ITU-T H.264/MPEG-4, Part 10, Advanced Video Coding (AVC), the High Efficiency Video Coding (HEVC) standard presently under development, and extensions of such standards, to transmit, receive and store digital video information more efficiently.

Video compression techniques perform spatial (intra-picture) prediction and/or temporal (inter-picture) prediction to reduce or remove redundancy inherent in video sequences. For block-based video coding, a video slice may be partitioned into video blocks, which may also be referred to as treeblocks, coding units (CUs) and/or coding nodes. Video blocks in an intra-coded (I) slice of a picture are encoded using spatial prediction with respect to reference samples in neighboring blocks in the same picture. Video blocks in an inter-coded (P or B) slice of a picture may use spatial prediction with respect to reference samples in neighboring blocks in the same picture or temporal prediction with respect to reference samples in other reference pictures. Pictures may be referred to as frames, and reference pictures may be referred to as reference frames.

The following documents provide background relating to candidate lists. JCTVC-F470 "Parsing Robustness for Merge/AMVP" describes an approach to parsing using fixed list lengths. JCTVC-D231 "Simplified Motion vector Prediction" describes modifications to improve motion vector prediction. JCTVC-F402 "MVP index parsing with fixed number of candidates" describes an approach using a fixed number of candidates for motion vector prediction.

JCTVC-G683 "Simplification and improvement of additional merge candidate" describes an element to evaluate parsing robustness. EP 2723076 describes approaches to using motion information and providing candidate lists.

### SUMMARY

The invention is set up in the appended claims. This disclosure describes techniques for generating candidate lists, for use in inter prediction coding, at a video encoder and for generating the same candidate lists at a video decoder. A video encoder and a video decoder can generate the same candidate lists by implementing the same techniques for constructing the candidate list. For example, both a video encoder and video decoder may construct lists with the same number of candidates. The video encoder and decoder may first consider spatial candidates (e.g. neighboring blocks in the same picture), then consider temporal candidates (e.g. candidates in a different picture), and finally may consider artificially generated candidates until the desired number of candidates are added to the list. According to the techniques of this disclosure, pruning operations may be utilized for certain types of candidates during candidate list construction in order to remove duplicates from the candidate list, while for other types of candidates, pruning may not be used in order to reduce coder complexity.

In one example, a method of coding video data includes determining a set of spatial candidates associated with a current portion of a current video frame, wherein the set of spatial candidates corresponds to neighboring portions of the current video frame adjacent to the current portion and wherein each of the spatial candidates has associated motion information; determining a temporal candidate associated with the current portion of the current video frame, wherein the temporal candidate corresponds to a portion of a reference video frame and wherein the temporal candidate has associated motion information; generating a list of candidates based on a subset of the set of spatial candidates and the temporal candidate; and, in response to the candidate list comprising less than a specified number of candidates, adding an artificially generated candidate to the list of candidates, wherein the artificially generated candidate has motion information that is the same as motion information of a spatial candidate of the subset or motion information of the temporal candidate.

In another example, a device for coding video data includes a video coder configured to determine a set of spatial candidates associated with a current portion of a current video frame, wherein the set of spatial candidates corresponds to neighboring portions of the current video frame adjacent to the current portion and wherein each of the spatial candidates has associated motion information; determine a temporal candidate associated with the current portion of the current video frame, wherein the temporal candidate corresponds to a portion of a reference video frame and wherein the temporal candidate has associated motion information; generate a list of candidates based on a subset of the set of spatial candidates and the temporal candidate; and, in response to the candidate list comprising less than a specified number of candidates, adding an artificially generated candidate to the list of candidates, wherein the artificially generated candidate has motion information that is the same as motion information of a spatial candidate of the subset or motion information of the temporal candidate.

In another example, a device for coding video data includes means for determining a set of spatial candidates associated with a current portion of a current video frame, wherein the set of spatial candidates corresponds to neighboring portions of the current video frame adjacent to the current portion and wherein each of the spatial candidates has associated motion information; means for determining a temporal candidate associated with the current portion of the current video frame, wherein the temporal candidate corresponds to a portion of a reference video frame and wherein the temporal candidate has associated motion information; means for generating a list of candidates based on a subset of the set of spatial candidates and the temporal candidate; and, means for adding an artificially generated candidate to the list of candidates in response to the candidate list comprising less than a specified number of candidates, wherein the artificially generated candidate has motion information that is the same as motion information of a spatial candidate of the subset or motion information of the temporal candidate.

In another example, a computer-readable storage medium stores instructions that when executed cause one or more processors to determine a set of spatial candidates associated with a current portion of a current video frame, wherein the set of spatial candidates corresponds to neighboring portions of the current video frame adjacent to the current portion and wherein each of the spatial candidates has associated motion information; determine a temporal candidate associated with the current portion of the current video frame, wherein the temporal candidate corresponds to a portion of a reference video frame and wherein the temporal candidate has associated motion information; generate a list of candidates based on a subset of the set of spatial candidates and the temporal candidate; and, add an artificially generated candidate to the list of candidates in response to the candidate list comprising less than a specified number of candidates, wherein the artificially generated candidate has motion information that is the same as motion information of a spatial candidate of the subset or motion information of the temporal candidate.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example video coding system that may utilize the techniques of this disclosure.
FIG. 2 is a block diagram illustrating an example video encoder that is configured to implement the techniques of this disclosure.
FIG. 3 is a block diagram illustrating an example video decoder that is configured to implement the techniques of this disclosure.
FIG. 4 is a block diagram that illustrates an example configuration of an inter prediction module.
FIG. 5 is a flowchart that illustrates an example merge operation.
FIG. 6 is a flowchart that illustrates an example advanced motion vector prediction (AMVP) operation.
FIG. 7 is a flowchart that illustrates an example motion compensation operation performed by a video decoder.
FIG. 8 is a conceptual diagram that illustrates a coding unit (CU) and example source locations associated with the CU.
FIG. 9 is a flowchart that illustrates an example candidate list construction operation.
FIG. 10 shows a graphical example of adding combined candidates to a merge candidate list.
FIG. 11 shows a graphical example of adding scaled candidates to a merge candidate list.
FIG. 12 shows a graphical example of adding zero candidates to a merge candidate list.
FIGS. 13A and 13B show a graphical example of generating mvoffset candidates.
FIG. 14 is a flowchart that illustrates examples of the techniques described in this disclosure.

### DETAILED DESCRIPTION

A video encoder may perform inter prediction to reduce temporal redundancy between pictures. As described below, a coding unit (CU) may have a plurality of prediction units (PUs). In other words, a plurality of PUs may belong to the CU. When the video encoder performs inter prediction, the video encoder may signal motion information for the PUs. The motion information of a PU may include, for example, a reference picture index, a motion vector, and a prediction direction indicator. The motion vector may indicate a displacement between a video block of the PU and a reference block of the PU. The reference block of the PU may be a portion of the reference picture that is similar to the video block of the PU. The reference block may be located in a reference picture indicated by the reference picture index and the prediction direction indicator.

To reduce the number of bits required to represent the motion information of the PUs, the video encoder may generate candidate lists for each of the PUs according to a merge mode or advanced motion vector prediction (AMVP) process. Each candidate in a candidate list for a PU may indicate motion information. The motion information indicated by some of the candidates in the candidate list may be based on the motion information of other PUs. This disclosure may refer to a candidate as an "original" candidate if the candidate indicates motion information of one of the specified spatial or temporal candidate locations. For example, for merge mode, there may be five original spatial candidate locations and one original temporal candidate location. In some examples, the video encoder may generate additional candidates by combining partial motion vectors from different original candidates, modifying original candidates, or simply insert zero motion vectors as candidates. These additional candidates are not considered to be original candidates and may be referred to in this disclosure as artificially generated candidates.

The techniques of this disclosure are generally related to techniques for generating candidate lists at the video encoder and techniques for generating the same candidate lists at a video decoder. A video encoder and a video decoder can generate the same candidate lists by implementing the same techniques for constructing the candidate list. For example, both a video encoder and video decoder may construct lists with the same number of candidates (e.g. five candidates). The video encoder and decoder may first consider spatial candidates (e.g. neighboring blocks in the same picture), then consider temporal candidates (e.g. candidates in a different picture), and finally may consider artificially generated candidates until the desired number of candidates are added to the list. According to the techniques of this disclosure, pruning operations may be utilized for certain types of candidates during candidate list construction in order to remove duplicates from the candidate list, while for other types of candidates, pruning may not be used in order to reduce coder complexity. For example, for a set of spatial candidates and for a temporal candidate, a pruning operation to exclude a candidate with duplicate motion information from the list of candidates may be performed. When adding an artificially generated candidate to the list of candidates, however, the artificially generated candidate may be added without performing a pruning operation on the artificially generated candidate.

After generating the candidate list for a PU of the CU, the video encoder may select a candidate from the candidate list and output a candidate index in a bitstream. The selected candidate may be the candidate that has a motion vector that results in a predictor that most closely matches the target PU being coded. The candidate index may indicate a position of the selected candidate in the candidate list. The video encoder may also generate a predictive video block for the PU based on a reference block indicated by the motion information of the PU. The motion information of the PU may be determinable based on the motion information indicated by the selected candidate. For instance, in merge mode, the motion information of the PU may be the same as the motion information indicated by the selected candidate. In AMVP mode, the motion information of the PU may be determined based on a motion vector difference of the PU and the motion information indicated by the selected candidate. The video encoder may generate one or more residual video blocks for the CU based on the predictive video blocks of the PUs of the CU and an original video block for the CU. The video encoder may then encode and output the one or more residual video blocks in the bitstream.

The bitstream may include data that identify selected candidates in the candidate lists of the PUs. The video decoder may determine motion information of the PUs based on motion information indicated by the selected candidates in the candidate lists of the PUs. The video decoder may identify one or more reference blocks for the PUs based on the motion information of the PUs. After identifying the one or more reference blocks of a PU, the video decoder may generate a predictive video block for the PU based on the one or more reference blocks of the PU. The video decoder may reconstruct a video block for the CU based on the predictive video blocks for the PUs of the CU and one or more residual video blocks for the CU.

For ease of explanation, this disclosure may describe locations or video blocks as having various spatial relationships with CUs or PUs. Such description may be interpreted to mean that the locations or video blocks have the various spatial relationships to the video blocks associated with the CUs or PUs. Furthermore, this disclosure may refer to a PU that a video coder is currently coding as the current PU. This disclosure may refer to a CU that a video coder is currently coding as the current CU. This disclosure may refer to a picture that a video coder is currently coding as the current picture.

The attached drawings illustrate examples. Elements indicated by reference numbers in the attached drawings correspond to elements indicated by like reference numbers in the following description. In this disclosure, elements having names that start with ordinal words (e.g., "first," "second," "third," and so on) do not necessarily imply that the elements have a particular order. Rather, such ordinal words are merely used to refer to different elements of a same or similar type.

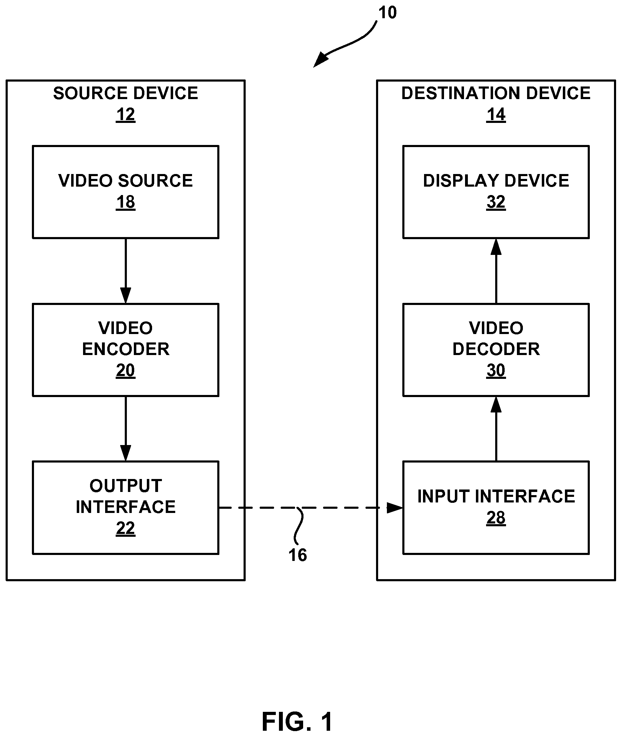

FIG. 1 is a block diagram that illustrates an example video coding system 10 that may utilize the techniques of this disclosure. As used described herein, the term "video coder" refers generically to both video encoders and video decoders. In this disclosure, the terms "video coding" or "coding" may refer generically to video encoding and video decoding.

As shown in FIG. 1, video coding system 10 includes a source device 12 and a destination device 14. Source device 12 generates encoded video data. Accordingly, source device 12 may be referred to as a video encoding device. Destination device 14 may decode the encoded video data generated by source device 12. Accordingly, destination device 14 may be referred to as a video decoding device. Source device 12 and destination device 14 may be examples of video coding devices.

Source device 12 and destination device 14 may comprise a wide range of devices, including desktop computers, mobile computing devices, notebook (e.g., laptop) computers, tablet computers, set-top boxes, telephone handsets such as so-called "smart" phones, televisions, cameras, display devices, digital media players, video gaming consoles, in-car computers, or the like. In some examples, source device 12 and destination device 14 may be equipped for wireless communication.

Destination device 14 may receive encoded video data from source device 12 via a channel 16. Channel 16 may comprise a type of medium or device capable of moving the encoded video data from source device 12 to destination device 14. In one example, channel 16 may comprise a communication medium that enables source device 12 to transmit encoded video data directly to destination device 14 in real-time. In this example, source device 12 may modulate the encoded video data according to a communication standard, such as a wireless communication protocol, and may transmit the modulated video data to destination device 14. The communication medium may comprise a wireless or wired communication medium, such as a radio frequency (RF) spectrum or one or more physical transmission lines. The communication medium may form part of a packet-based network, such as a local area network, a wide-area network, or a global network such as the Internet. The communication medium may include routers, switches, base stations, or other equipment that facilitates communication from source device 12 to destination device 14.

In another example, channel 16 may correspond to a storage medium that stores the encoded video data generated by source device 12. In this example, destination device 14 may access the storage medium via disk access or card access. The storage medium may include a variety of locally accessed data storage media such as Blu-ray discs, DVDs, CD-ROMs, flash memory, or other suitable digital storage media for storing encoded video data. In a further example, channel 16 may include a file server or another intermediate storage device that stores the encoded video generated by source device 12. In this example, destination device 14 may access encoded video data stored at the file server or other intermediate storage device via streaming or download. The file server may be a type of server capable of storing encoded video data and transmitting the encoded video data to destination device 14. Example file servers include web servers (e.g., for a website), file transfer protocol (FTP) servers, network attached storage (NAS) devices, and local disk drives. Destination device 14 may access the encoded video data through a standard data connection, including an Internet connection. Example types of data connections may include wireless channels (e.g., Wi-Fi connections), wired connections (e.g., DSL, cable modem, etc.), or combinations of both that are suitable for accessing encoded video data stored on a file server. The transmission of encoded video data from the file server may be a streaming transmission, a download transmission, or a combination of both.

The techniques of this disclosure are not limited to wireless applications or settings. The techniques may be applied to video coding in support of any of a variety of multimedia applications, such as over-the-air television broadcasts, cable television transmissions, satellite television transmissions, streaming video transmissions, e.g., via the Internet, encoding of digital video for storage on a data storage medium, decoding of digital video stored on a data storage medium, or other applications. In some examples, video coding system 10 may be configured to support one-way or two-way video transmission to support applications such as video streaming, video playback, video broadcasting, and/or video telephony.

In the example of FIG. 1, source device 12 includes a video source 18, video encoder 20, and an output interface 22. In some cases, output interface 22 may include a modulator/demodulator (modem) and/or a transmitter. In source device 12, video source 18 may include a source such as a video capture device, e.g., a video camera, a video archive containing previously captured video data, a video feed interface to receive video data from a video content provider, and/or a computer graphics system for generating video data, or a combination of such sources.

Video encoder 20 may encode the captured, pre-captured, or computer-generated video data. The encoded video data may be transmitted directly to destination device 14 via output interface 22 of source device 12. The encoded video data may also be stored onto a storage medium or a file server for later access by destination device 14 for decoding and/or playback.

In the example of FIG. 1, destination device 14 includes an input interface 28, a video decoder 30, and a display device 32. In some cases, input interface 28 may include a receiver and/or a modem. Input interface 28 of destination device 14 receives encoded video data over channel 16. The encoded video data may include a variety of syntax elements generated by video encoder 20 that represent the video data. Such syntax elements may be included with the encoded video data transmitted on a communication medium, stored on a storage medium, or stored a file server.

Display device 32 may be integrated with or may be external to destination device 14. In some examples, destination device 14 may include an integrated display device and may also be configured to interface with an external display device. In other examples, destination device 14 may be a display device. In general, display device 32 displays the decoded video data to a user. Display device 32 may comprise any of a variety of display devices such as a liquid crystal display (LCD), a plasma display, an organic light emitting diode (OLED) display, or another type of display device.

Video encoder 20 and video decoder 30 may operate according to a video compression standard, such as the High Efficiency Video Coding (HEVC) standard presently under development, and may conform to a HEVC Test Model (HM). A recent draft of the upcoming HEVC standard, referred to as "HEVC Working Draft 6" or "WD6," is described in document JCTVC-H1003, Bross et al., "High efficiency video coding (HEVC) text specification draft 6," Joint Collaborative Team on Video Coding (JCT-VC) of ITU-T SG16 WP3 and ISO/IEC JTC1/SC29/WG11, 8th Meeting: San Jose, CA, USA, February 2012, which, as of 01 May 2012, is downloadable from: http://phenix.int-evry.fr/jct/doc_end_user/documents/8_San%20Jose/wg11/JCTVC-H1003-v22.zip. Another recent draft of the HEVC standard, referred to as "HEVC Working Draft 7" or "WD7," is described in document HCTVC-I1003, Bross et al., "High Efficiency Video Coding (HEVC) Text Specification Draft 7," Joint Collaborative Team on Video Coding (JCT-VC) of ITU-T SG16 WP3 and ISO/IEC JTC1/SC29/WG11, 9th Meeting: Geneva, Switzerland, 27 April 2012 to 7 May 2012, which, as of 5 June 2102, is downloadable from http://phenix.it-sudparis .eu/jct/doc_end_user/documents/9_Geneva/wg11 /JCTVC-11003 -v3 .zip.

Alternatively, video encoder 20 and video decoder 30 may operate according to other proprietary or industry standards, such as the ITU-T H.264 standard, alternatively referred to as MPEG-4, Part 10, Advanced Video Coding (AVC), or extensions of such standards. The techniques of this disclosure, however, are not limited to any particular coding standard or technique. Other examples of video compression standards and techniques include MPEG-2, ITU-T H.263 and proprietary or open source compression formats such as VP8 and related formats.

Although not shown in the example of FIG. 1, video encoder 20 and video decoder 30 may each be integrated with an audio encoder and decoder, and may include appropriate MUX-DEMUX units, or other hardware and software, to handle encoding of both audio and video in a common data stream or separate data streams. If applicable, in some examples, MUX-DEMUX units may conform to the ITU H.223 multiplexer protocol, or other protocols such as the user datagram protocol (UDP).

Again, FIG. 1 is merely an example and the techniques of this disclosure may apply to video coding settings (e.g., video encoding or video decoding) that do not necessarily include any data communication between the encoding and decoding devices. In other examples, data can be retrieved from a local memory, streamed over a network, or the like. An encoding device may encode and store data to memory, and/or a decoding device may retrieve and decode data from memory. In many examples, the encoding and decoding is performed by devices that do not communicate with one another, but simply encode data to memory and/or retrieve and decode data from memory.

Video encoder 20 and video decoder 30 each may be implemented as any of a variety of suitable circuitry, such as one or more microprocessors, digital signal processors (DSPs), application specific integrated circuits (ASICs), field programmable gate arrays (FPGAs), discrete logic, hardware, or any combinations thereof. When the techniques are implemented partially in software, a device may store instructions for the software in a suitable, non-transitory computer-readable storage medium and may execute the instructions in hardware using one or more processors to perform the techniques of this disclosure. Each of video encoder 20 and video decoder 30 may be included in one or more encoders or decoders, either of which may be integrated as part of a combined encoder/decoder (CODEC) in a respective device.

As mentioned briefly above, video encoder 20 encodes video data. The video data may comprise one or more pictures. Each of the pictures is a still image forming part of a video. In some instances, a picture may be referred to as a video "frame." When video encoder 20 encodes the video data, video encoder 20 may generate a bitstream. The bitstream may include a sequence of bits that form a coded representation of the video data. The bitstream may include coded pictures and associated data. A coded picture is a coded representation of a picture.

To generate the bitstream, video encoder 20 may perform encoding operations on each picture in the video data. When video encoder 20 performs encoding operations on the pictures, video encoder 20 may generate a series of coded pictures and associated data. The associated data may include sequence parameter sets, picture parameter sets, adaptation parameter sets, and other syntax structures. A sequence parameter set (SPS) may contain parameters applicable to zero or more sequences of pictures. A picture parameter set (PPS) may contain parameters applicable to zero or more pictures. An adaptation parameter set (APS) may contain parameters applicable to zero or more pictures. Parameters in an APS may be parameters that are more likely to change than parameters in a PPS.

To generate a coded picture, video encoder 20 may partition a picture into video blocks. A video block may be a two-dimensional array of samples. Each of the video blocks is associated with a treeblock. In some instances, a treeblock may be referred to as a largest coding unit (LCU). The treeblocks of HEVC may be broadly analogous to the macroblocks of previous standards, such as H.264/AVC. However, a treeblock is not necessarily limited to a particular size and may include one or more coding units (CUs). Video encoder 20 may use quadtree partitioning to partition the video blocks of treeblocks into video blocks associated with CUs, hence the name "treeblocks."

In some examples, video encoder 20 may partition a picture into a plurality of slices. Each of the slices may include an integer number of CUs. In some instances, a slice comprises an integer number of treeblocks. In other instances, a boundary of a slice may be within a treeblock.

As part of performing an encoding operation on a picture, video encoder 20 may perform encoding operations on each slice of the picture. When video encoder 20 performs an encoding operation on a slice, video encoder 20 may generate encoded data associated with the slice. The encoded data associated with the slice may be referred to as a "coded slice."

To generate a coded slice, video encoder 20 may perform encoding operations on each treeblock in a slice. When video encoder 20 performs an encoding operation on a treeblock, video encoder 20 may generate a coded treeblock. The coded treeblock may comprise data representing an encoded version of the treeblock.

When video encoder 20 generates a coded slice, video encoder 20 may perform encoding operations on (i.e., encode) the treeblocks in the slice according to a raster scan order. In other words, video encoder 20 may encode the treeblocks of the slice in an order that proceeds from left to right across a topmost row of treeblocks in the slice, then proceeds from left to right across a next lower row of treeblocks, and so on until video encoder 20 has encoded each of the treeblocks in the slice.

As a result of encoding the treeblocks according to the raster scan order, the treeblocks above and to the left of a given treeblock may have been encoded, but treeblocks below and to the right of the given treeblock have not yet been encoded. Consequently, video encoder 20 may be able to access information generated by encoding treeblocks above and to the left of the given treeblock when encoding the given treeblock. However, video encoder 20 may be unable to access information generated by encoding treeblocks below and to the right of the given treeblock when encoding the given treeblock.

To generate a coded treeblock, video encoder 20 may recursively perform quadtree partitioning on the video block of the treeblock to divide the video block into progressively smaller video blocks. Each of the smaller video blocks may be associated with a different CU. For example, video encoder 20 may partition the video block of a treeblock into four equally-sized sub-blocks, partition one or more of the sub-blocks into four equally-sized sub-sub-blocks, and so on. A partitioned CU may be a CU whose video block is partitioned into video blocks associated with other CUs. A non-partitioned CU may be a CU whose video block is not partitioned into video blocks associated with other CUs.

One or more syntax elements in the bitstream may indicate a maximum number of times video encoder 20 may partition the video block of a treeblock. A video block of a CU may be square in shape. The size of the video block of a CU (i.e., the size of the CU) may range from 8x8 pixels up to the size of a video block of a treeblock (i.e., the size of the treeblock) with a maximum of 64x64 pixels or greater.

Video encoder 20 may perform encoding operations on (i.e., encode) each CU of a treeblock according to a z-scan order. In other words, video encoder 20 may encode a top-left CU, a top-right CU, a bottom-left CU, and then a bottom-right CU, in that order. When video encoder 20 performs an encoding operation on a partitioned CU, video encoder 20 may encode CUs associated with sub-blocks of the video block of the partitioned CU according to the z-scan order. In other words, video encoder 20 may encode a CU associated with a top-left sub-block, a CU associated with a top-right sub-block, a CU associated with a bottom-left sub-block, and then a CU associated with a bottom-right sub-block, in that order.

As a result of encoding the CUs of a treeblock according to a z-scan order, the CUs above, above-and-to-the-left, above-and-to-the-right, left, and below-and-to-the left of a given CU may have been encoded. CUs below or to the right of the given CU have not yet been encoded. Consequently, video encoder 20 may be able to access information generated by encoding some CUs that neighbor the given CU when encoding the given CU. However, video encoder 20 may be unable to access information generated by encoding other CUs that neighbor the given CU when encoding the given CU.

When video encoder 20 encodes a non-partitioned CU, video encoder 20 may generate one or more prediction units (PUs) for the CU. Each of the PUs of the CU may be associated with a different video block within the video block of the CU. Video encoder 20 may generate a predictive video block for each PU of the CU. The predictive video block of a PU may be a block of samples. Video encoder 20 may use intra prediction or inter prediction to generate the predictive video block for a PU.

When video encoder 20 uses intra prediction to generate the predictive video block of a PU, video encoder 20 may generate the predictive video block of the PU based on decoded samples of the picture associated with the PU. If video encoder 20 uses intra prediction to generate predictive video blocks of the PUs of a CU, the CU is an intra-predicted CU. When video encoder 20 uses inter prediction to generate the predictive video block of the PU, video encoder 20 may generate the predictive video block of the PU based on decoded samples of one or more pictures other than the picture associated with the PU. If video encoder 20 uses inter prediction to generate predictive video blocks of the PUs of a CU, the CU is an inter-predicted CU.

Furthermore, when video encoder 20 uses inter prediction to generate a predictive video block for a PU, video encoder 20 may generate motion information for the PU. The motion information for a PU may indicate one or more reference blocks of the PU. Each reference block of the PU may be a video block within a reference picture. The reference picture may be a picture other than the picture associated with the PU. In some instances, a reference block of a PU may also be referred to as the "reference sample" of the PU. Video encoder 20 may generate the predictive video block for the PU based on the reference blocks of the PU.

After video encoder 20 generates predictive video blocks for one or more PUs of a CU, video encoder 20 may generate residual data for the CU based on the predictive video blocks for the PUs of the CU. The residual data for the CU may indicate differences between samples in the predictive video blocks for the PUs of the CU and the original video block of the CU.

Furthermore, as part of performing an encoding operation on a non-partitioned CU, video encoder 20 may perform recursive quadtree partitioning on the residual data of the CU to partition the residual data of the CU into one or more blocks of residual data (i.e., residual video blocks) associated with transform units (TUs) of the CU. Each TU of a CU may be associated with a different residual video block.

Video coder 20 may apply one or more transforms to residual video blocks associated with the TUs to generate transform coefficient blocks (i.e., blocks of transform coefficients) associated with the TUs. Conceptually, a transform coefficient block may comprise a two-dimensional (2D) matrix of transform coefficients that represent magnitudes in a frequency domain of the transform.

After generating a transform coefficient block, video encoder 20 may perform a quantization process on the transform coefficient block. Quantization generally refers to a process in which transform coefficients are quantized to possibly reduce the amount of data used to represent the transform coefficients, providing further compression. The quantization process may reduce the bit depth associated with some or all of the transform coefficients. For example, an n-bit transform coefficient may be rounded down to an *m*-bit transform coefficient during quantization, where *n* is greater than *m.*

Video encoder 20 may associate each CU with a quantization parameter (QP) value. The QP value associated with a CU may determine how video encoder 20 quantizes transform coefficient blocks associated with the CU. Video encoder 20 may adjust the degree of quantization applied to the transform coefficient blocks associated with a CU by adjusting the QP value associated with the CU.

After video encoder 20 quantizes a transform coefficient block, video encoder 20 may generate sets of syntax elements that represent the transform coefficients in the quantized transform coefficient block. Video encoder 20 may apply entropy encoding operations, such as Context Adaptive Binary Arithmetic Coding (CABAC) operations, to some of these syntax elements.

The bitstream generated by video encoder 20 may include a series of Network Abstraction Layer (NAL) units. Each of the NAL units may be a syntax structure containing an indication of a type of data in the NAL unit and bytes containing the data. For example, a NAL unit may contain data representing a sequence parameter set, a picture parameter set, a coded slice, supplemental enhancement information (SEI), an access unit delimiter, filler data, or another type of data. The data in a NAL unit may include various syntax structures.

Video decoder 30 may receive the bitstream generated by video encoder 20. The bitstream may include a coded representation of the video data encoded by video encoder 20. When video decoder 30 receives the bitstream, video decoder 30 may perform a parsing operation on the bitstream. When video decoder 30 performs the parsing operation, video decoder 30 may extract syntax elements from the bitstream. Video decoder 30 may reconstruct the pictures of the video data based on the syntax elements extracted from the bitstream. The process to reconstruct the video data based on the syntax elements may be generally reciprocal to the process performed by video encoder 20 to generate the syntax elements.

After video decoder 30 extracts the syntax elements associated with a CU, video decoder 30 may generate predictive video blocks for the PUs of the CU based on the syntax elements. In addition, video decoder 30 may inverse quantize transform coefficient blocks associated with TUs of the CU. Video decoder 30 may perform inverse transforms on the transform coefficient blocks to reconstruct residual video blocks associated with the TUs of the CU. After generating the predictive video blocks and reconstructing the residual video blocks, video decoder 30 may reconstruct the video block of the CU based on the predictive video blocks and the residual video blocks. In this way, video decoder 30 may reconstruct the video blocks of CUs based on the syntax elements in the bitstream.

As briefly described above, video encoder 20 may use inter prediction to generate predictive video blocks and motion information for the PUs of a CU. In many instances, the motion information of a given PU is likely to be the same or similar to the motion information of one or more nearby PUs (i.e., PUs whose video blocks are spatially or temporally nearby to the video block of the given PU). Because nearby PUs frequently have similar motion information, video encoder 20 may encode the motion information of a given PU with reference to the motion information of a nearby PU. Encoding the motion information of the given PU with reference to the motion information of the nearby PU may reduce the number of bits required in the bitstream to indicate the motion information of the given PU.

Video encoder 20 may encode the motion information of a given PU with reference to the motion information of a nearby PU in various ways. For example, video encoder 20 may indicate that the motion information of the given PU is the same as the motion information of the nearby PU. This disclosure may use the phrase "merge mode" to refer to indicating that the motion information of a given PU is the same as the motion information of a nearby PU or can be derived from motion information of nearby PUs. In another example, video encoder 20 may calculate a motion vector difference (MVD) for the given PU. The MVD indicates the difference between a motion vector of the given PU and a motion vector of the nearby PU. In this example, video encoder 20 may include the MVD in the motion information of the given PU instead of the motion vector of the given PU. Fewer bits may be required in the bitstream to represent the MVD than the motion vector of the given PU. This disclosure may use the phrase "advanced motion vector prediction" (AMVP) mode to refer to signaling the motion information of the given PU by using a MVD and an index value that identifies a candidate motion vector.

To signal the motion information of a given PU using merge mode or AMVP mode, the video encoder 20 may generate a candidate list for the given PU. The candidate list may include one or more candidates. Each of the candidates in the candidate list for the given PU may specify motion information. The motion information indicated by each candidate may include a motion vector, a reference picture index, and a prediction direction indicator. The candidates in the candidate list may include "original" candidates each of which indicates motion information of one of the specified candidate locations inside a PU other than the given PU.

After generating the candidate list for a PU, video encoder 20 may select one of the candidates from the candidate list for the PU. For example, the video encoder may compare each candidate to the PU being coded and may select the candidate that a desirable rate-distortion performance. Video encoder 20 may output a candidate index for the PU. The candidate index may identify a position in the candidate list for the selected candidate.

Furthermore, video encoder 20 may generate a predictive video block for the PU based on reference blocks indicated by motion information of the PU. The motion information of the PU may be determinable based on motion information indicated by the selected candidate in the candidate list for the PU. For instance, in merge mode, the motion information of the PU may be the same as the motion information indicated by the selected candidate. In AMVP mode, the motion information of the PU may be determinable based on a motion vector difference (MVD) for the PU and the motion information indicated by the selected candidate. Video encoder 20 may process the predictive video block for the PU as described above.

When video decoder 30 receives the bitstream, video decoder 30 may generate candidate lists for each of the PUs of the CU. The candidate lists generated for the PUs by video decoder 30 may be the same as the candidate lists generated for the PUs by video encoder 20. A syntax element parsed from the bitstream may indicate the positions of selected candidates in the candidate lists of the PUs. After generating the candidate list for a PU, video decoder 30 may generate a predictive video block for the PU based on one or more reference blocks indicated by motion information of the PU. Video decoder 30 may determine the motion information of the PU based on motion information indicated by the selected candidate in the candidate list for the PU. Video decoder 30 may reconstruct a video block for the CU based on the predictive video blocks for the PUs and residual video blocks for the CU.

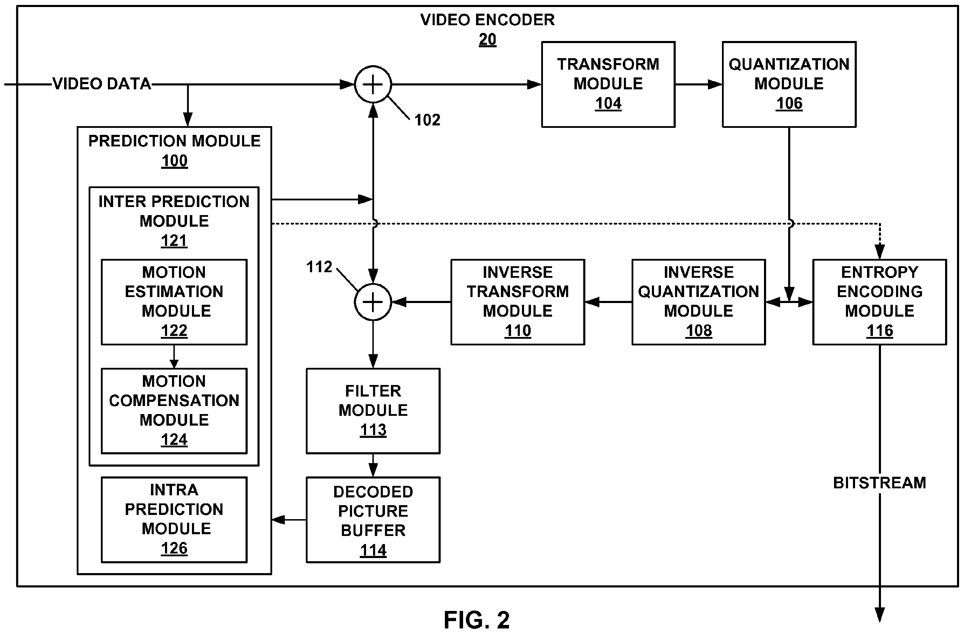

FIG. 2 is a block diagram that illustrates an example video encoder 20 that is configured to implement the techniques of this disclosure. FIG. 2 is provided for purposes of explanation and should not be considered limiting of the techniques as broadly exemplified and described in this disclosure. For purposes of explanation, this disclosure describes video encoder 20 in the context of HEVC coding. However, the techniques of this disclosure may be applicable to other coding standards or methods.

In the example of FIG. 2, video encoder 20 includes a plurality of functional components. The functional components of video encoder 20 include a prediction module 100, a residual generation module 102, a transform module 104, a quantization module 106, an inverse quantization module 108, an inverse transform module 110, a reconstruction module 112, a filter module 113, a decoded picture buffer 114, and an entropy encoding module 116. Prediction module 100 includes an inter prediction module 121, motion estimation module 122, a motion compensation module 124, and an intra prediction module 126. In other examples, video encoder 20 may include more, fewer, or different functional components. Furthermore, motion estimation module 122 and motion compensation module 124 may be highly integrated, but are represented in the example of FIG. 2 separately for purposes of explanation.

Video encoder 20 may receive video data. Video encoder 20 may receive the video data from various sources. For example, video encoder 20 may receive the video data from video source 18 (FIG. 1) or another source. The video data may represent a series of pictures. To encode the video data, video encoder 20 may perform an encoding operation on each of the pictures. As part of performing the encoding operation on a picture, video encoder 20 may perform encoding operations on each slice of the picture. As part of performing an encoding operation on a slice, video encoder 20 may perform encoding operations on treeblocks in the slice.

As part of performing an encoding operation on a treeblock, prediction module 100 may perform quadtree partitioning on the video block of the treeblock to divide the video block into progressively smaller video blocks. Each of the smaller video blocks may be associated with a different CU. For example, prediction module 100 may partition a video block of a treeblock into four equally-sized sub-blocks, partition one or more of the sub-blocks into four equally-sized sub-sub-blocks, and so on.

The sizes of the video blocks associated with CUs may range from 8x8 samples up to the size of the treeblock with a maximum of 64x64 samples or greater. In this disclosure, "NxN" and "N by N" may be used interchangeably to refer to the sample dimensions of a video block in terms of vertical and horizontal dimensions, e.g., 16x16 samples or 16 by 16 samples. In general, a 16x16 video block has sixteen samples in a vertical direction (y = 16) and sixteen samples in a horizontal direction (x = 16). Likewise, an NxN block generally has N samples in a vertical direction and N samples in a horizontal direction, where N represents a nonnegative integer value.

Furthermore, as part of performing the encoding operation on a treeblock, prediction module 100 may generate a hierarchical quadtree data structure for the treeblock. For example, a treeblock may correspond to a root node of the quadtree data structure. If prediction module 100 partitions the video block of the treeblock into four sub-blocks, the root node has four child nodes in the quadtree data structure. Each of the child nodes corresponds to a CU associated with one of the sub-blocks. If prediction module 100 partitions one of the sub-blocks into four sub-sub-blocks, the node corresponding to the CU associated with the sub-block may have four child nodes, each of which corresponds to a CU associated with one of the sub-sub-blocks.

Each node of the quadtree data structure may contain syntax data (e.g., syntax elements) for the corresponding treeblock or CU. For example, a node in the quadtree may include a split flag that indicates whether the video block of the CU corresponding to the node is partitioned (i.e., split) into four sub-blocks. Syntax elements for a CU may be defined recursively, and may depend on whether the video block of the CU is split into sub-blocks. A CU whose video block is not partitioned may correspond to a leaf node in the quadtree data structure. A coded treeblock may include data based on the quadtree data structure for a corresponding treeblock.

Video encoder 20 may perform encoding operations on each non-partitioned CU of a treeblock. When video encoder 20 performs an encoding operation on a non-partitioned CU, video encoder 20 generates data representing an encoded representation of the non-partitioned CU.

As part of performing an encoding operation on a CU, prediction module 100 may partition the video block of the CU among one or more PUs of the CU. Video encoder 20 and video decoder 30 may support various PU sizes. Assuming that the size of a particular CU is 2Nx2N, video encoder 20 and video decoder 30 may support PU sizes of 2Nx2N or NxN for intra prediction, and symmetric PU sizes of 2Nx2N, 2NxN, Nx2N, NxN, or similar for inter prediction. Video encoder 20 and video decoder 30 may also support asymmetric partitioning for PU sizes of 2NxnU, 2NxnD, nLx2N, and nRx2N for inter prediction. In some examples, prediction module 100 may perform geometric partitioning to partition the video block of a CU among PUs of the CU along a boundary that does not meet the sides of the video block of the CU at right angles.

Inter prediction module 121 may perform inter prediction on each PU of the CU. Inter prediction may provide temporal compression. To perform inter prediction on a PU, motion estimation module 122 may generate motion information for the PU. Motion compensation module 124 may generate a predictive video block for the PU based the motion information and decoded samples of pictures other than the picture associated with the CU (i.e., reference pictures). In this disclosure, a video block predicted through a predictive video block generated by motion compensation module 124 may be referred to as an inter-predicted video block.

Slices may be I slices, P slices, or B slices. Motion estimation module 122 and motion compensation module 124 may perform different operations for a PU of a CU depending on whether the PU is in an I slice, a P slice, or a B slice. In an I slice, all PUs are intra predicted. Hence, if the PU is in an I slice, motion estimation module 122 and motion compensation module 124 do not perform inter prediction on the PU.

If the PU is in a P slice, the picture containing the PU is associated with a list of reference pictures referred to as "list 0." Each of the reference pictures in list 0 contains samples that may be used for inter prediction of other pictures. When motion estimation module 122 performs the motion estimation operation with regard to a PU in a P slice, motion estimation module 122 may search the reference pictures in list 0 for a reference block for the PU. The reference block of the PU may be a set of samples, e.g., a block of samples, that most closely corresponds to the samples in the video block of the PU. Motion estimation module 122 may use a variety of metrics to determine how closely a set of samples in a reference picture corresponds to the samples in the video block of a PU. For example, motion estimation module 122 may determine how closely a set of samples in a reference picture corresponds to the samples in the video block of a PU by sum of absolute difference (SAD), sum of square difference (SSD), or other difference metrics.

After identifying a reference block of a PU in a P slice, motion estimation module 122 may generate a reference index that indicates the reference picture in list 0 containing the reference block and a motion vector that indicates a spatial displacement between the PU and the reference block. In various examples, motion estimation module 122 may generate motion vectors to varying degrees of precision. For example, motion estimation module 122 may generate motion vectors at one-quarter sample precision, one-eighth sample precision, or other fractional sample precision. In the case of fractional sample precision, reference block values may be interpolated from integer-position sample values in the reference picture. Motion estimation module 122 may output the reference index and the motion vector as the motion information of the PU. Motion compensation module 124 may generate a predictive video block of the PU based on the reference block identified by the motion information of the PU.

If the PU is located in a B slice, the picture containing the PU may be associated with two lists of reference pictures, referred to as "list 0" and "list 1." In some examples, a picture containing a B slice may be associated with a list combination that is a combination of list 0 and list 1.

Furthermore, if the PU is located in a B slice, motion estimation module 122 may perform uni-directional prediction or bi-directional prediction for the PU. When motion estimation module 122 performs uni-directional prediction for the PU, motion estimation module 122 may search the reference pictures of list 0 or list 1 for a reference block for the PU. Motion estimation module 122 may then generate a reference index that indicates the reference picture in list 0 or list 1 that contains the reference block and a motion vector that indicates a spatial displacement between the PU and the reference block. Motion estimation module 122 may output the reference index, a prediction direction indicator, and the motion vector as the motion information of the PU. The prediction direction indicator may indicate whether the reference index indicates a reference picture in list 0 or list 1. Motion compensation module 124 may generate the predictive video block of the PU based on the reference block indicated by the motion information of the PU.

When motion estimation module 122 performs bi-directional prediction for a PU, motion estimation module 122 may search the reference pictures in list 0 for a reference block for the PU and may also search the reference pictures in list 1 for another reference block for the PU. Motion estimation module 122 may then generate reference indexes that indicate the reference pictures in list 0 and list 1 containing the reference blocks and motion vectors that indicate spatial displacements between the reference blocks and the PU. Motion estimation module 122 may output the reference indexes and the motion vectors of the PU as the motion information of the PU. Motion compensation module 124 may generate the predictive video block of the PU based on the reference blocks indicated by the motion information of the PU.

In some instances, motion estimation module 122 does not output a full set of motion information for a PU to entropy encoding module 116. Rather, motion estimation module 122 may signal the motion information of a PU with reference to the motion information of another PU. For example, motion estimation module 122 may determine that the motion information of the PU is sufficiently similar to the motion information of a neighboring PU. In this example, motion estimation module 122 may indicate, in a syntax structure associated with the PU, a value that indicates to video decoder 30 that the PU has the same motion information as the neighboring PU or has motion information that can be derived from neighboring PUs. In another example, motion estimation module 122 may identify, in a syntax structure associated with the PU, a motion candidate associated with neighboring PUs and a motion vector difference (MVD). The MVD indicates a difference between the motion vector of the PU and the motion vector of the indicated motion candidate associated with neighboring PU. Video decoder 30 may use the motion vector of the indicated motion candidate and the MVD to determine the motion vector of the PU. By referring to the motion information of a candidate associated with a first PU when signaling the motion information of a second PU, video encoder 20 may be able to signal the motion information of the second PU using fewer bits than would otherwise be needed to communicate a motion vector.

As described below, inter prediction module 121 may generate a candidate list for each PU of a CU. One or more of the candidate lists may include one or more original candidates and one or more additional candidates that are derived from original candidates.

As part of performing an encoding operation on a CU, intra prediction module 126 may perform intra prediction on PUs of the CU. Intra prediction may provide spatial compression. When intra prediction module 126 performs intra prediction on a PU, intra prediction module 126 may generate prediction data for the PU based on decoded samples of other PUs in the same picture. The prediction data for the PU may include a predictive video block and various syntax elements. Intra prediction module 126 may perform intra prediction on PUs in I slices, P slices, and B slices.

To perform intra prediction on a PU, intra prediction module 126 may use multiple intra prediction modes to generate multiple sets of prediction data for the PU. When intra prediction module 126 uses an intra prediction mode to generate a set of prediction data for the PU, intra prediction module 126 may extend samples from video blocks of neighboring PUs across the video block of the PU in a direction and/or gradient associated with the intra prediction mode. The neighboring PUs may be above, above and to the right, above and to the left, or to the left of the PU, assuming a left-to-right, top-to-bottom encoding order for PUs, CUs, and treeblocks. Intra prediction module 126 may use various numbers of intra prediction modes, e.g., 33 directional intra prediction modes. In some examples, the number of intra prediction modes may depend on the size of the PU.

Prediction module 100 may select the prediction data for a PU from among the prediction data generated by motion compensation module 124 for the PU or the prediction data generated by intra prediction module 126 for the PU. In some examples, prediction module 100 selects the prediction data for the PU based on rate/distortion metrics of the sets of prediction data.

If prediction module 100 selects prediction data generated by intra prediction module 126, prediction module 100 may signal the intra prediction mode that was used to generate the prediction data for the PUs, i.e., the selected intra prediction mode. Prediction module 100 may signal the selected intra prediction mode in various ways. For example, it is probable that the selected intra prediction mode is the same as the intra prediction mode of a neighboring PU. In other words, the intra prediction mode of the neighboring PU may be the most probable mode for the current PU. Thus, prediction module 100 may generate a syntax element to indicate that the selected intra prediction mode is the same as the intra prediction mode of the neighboring PU.

After prediction module 100 selects the prediction data for PUs of a CU, residual generation module 102 may generate residual data for the CU by subtracting the predictive video blocks of the PUs of the CU from the video block of the CU. The residual data of a CU may include 2D residual video blocks that correspond to different sample components of the samples in the video block of the CU. For example, the residual data may include a residual video block that corresponds to differences between luminance components of samples in the predictive video blocks of the PUs of the CU and luminance components of samples in the original video block of the CU. In addition, the residual data of the CU may include residual video blocks that correspond to the differences between chrominance components of samples in the predictive video blocks of the PUs of the CU and the chrominance components of the samples in the original video block of the CU.

Prediction module 100 may perform quadtree partitioning in order to partition the residual video blocks of a CU into sub-blocks. Each undivided residual video block may be associated with a different TU of the CU. The sizes and positions of the residual video blocks associated with TUs of a CU may or may not be based on the sizes and positions of video blocks associated with the PUs of the CU. A quadtree structure known as a "residual quad tree" (RQT) may include nodes associated with each of the residual video blocks. The TUs of a CU may correspond to leaf nodes of the RQT.

Transform module 104 may generate one or more transform coefficient blocks for each TU of a CU by applying one or more transforms to a residual video block associated with the TU. Each of the transform coefficient blocks may be a 2D matrix of transform coefficients. Transform module 104 may apply various transforms to the residual video block associated with a TU. For example, transform module 104 may apply a discrete cosine transform (DCT), a directional transform, or a conceptually similar transform to the residual video block associated with a TU.

After transform module 104 generates a transform coefficient block associated with a TU, quantization module 106 may quantize the transform coefficients in the transform coefficient block. Quantization module 106 may quantize a transform coefficient block associated with a TU of a CU based on a QP value associated with the CU.

Video encoder 20 may associate a QP value with a CU in various ways. For example, video encoder 20 may perform a rate-distortion analysis on a treeblock associated with the CU. In the rate-distortion analysis, video encoder 20 may generate multiple coded representations of the treeblock by performing an encoding operation multiple times on the treeblock. Video encoder 20 may associate different QP values with the CU when video encoder 20 generates different encoded representations of the treeblock. Video encoder 20 may signal that a given QP value is associated with the CU when the given QP value is associated with the CU in a coded representation of the treeblock that has a lowest bitrate and distortion metric.

Inverse quantization module 108 and inverse transform module 110 may apply inverse quantization and inverse transforms to the transform coefficient block, respectively, to reconstruct a residual video block from the transform coefficient block. Reconstruction module 112 may add the reconstructed residual video block to corresponding samples from one or more predictive video blocks generated by prediction module 100 to produce a reconstructed video block associated with a TU. By reconstructing video blocks for each TU of a CU in this way, video encoder 20 may reconstruct the video block of the CU.

After reconstruction module 112 reconstructs the video block of a CU, filter module 113 may perform a deblocking operation to reduce blocking artifacts in the video block associated with the CU. After performing the one or more deblocking operations, filter module 113 may store the reconstructed video block of the CU in decoded picture buffer 114. Motion estimation module 122 and motion compensation module 124 may use a reference picture that contains the reconstructed video block to perform inter prediction on PUs of subsequent pictures. In addition, intra prediction module 126 may use reconstructed video blocks in decoded picture buffer 114 to perform intra prediction on other PUs in the same picture as the CU.

Entropy encoding module 116 may receive data from other functional components of video encoder 20. For example, entropy encoding module 116 may receive transform coefficient blocks from quantization module 106 and may receive syntax elements from prediction module 100. When entropy encoding module 116 receives the data, entropy encoding module 116 may perform one or more entropy encoding operations to generate entropy encoded data. For example, video encoder 20 may perform a context adaptive variable length coding (CAVLC) operation, a CABAC operation, a variable-to-variable (V2V) length coding operation, a syntax-based context-adaptive binary arithmetic coding (SBAC) operation, a Probability Interval Partitioning Entropy (PIPE) coding operation, or another type of entropy encoding operation on the data. Entropy encoding module 116 may output a bitstream that includes the entropy encoded data.

As part of performing an entropy encoding operation on data, entropy encoding module 116 may select a context model. If entropy encoding module 116 is performing a CABAC operation, the context model may indicate estimates of probabilities of particular bins having particular values. In the context of CABAC, the term "bin" is used to refer to a bit of a binarized version of a syntax element.

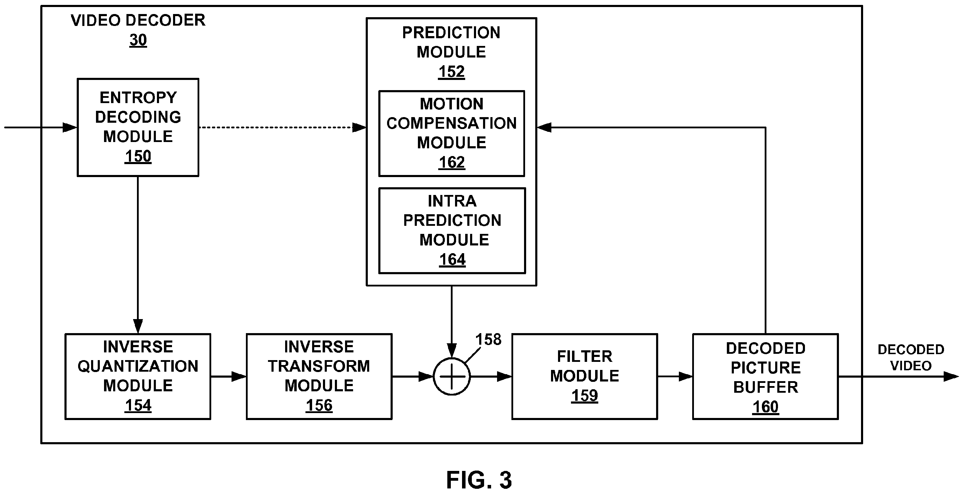

FIG. 3 is a block diagram that illustrates an example video decoder 30 that is configured to implement the techniques of this disclosure. FIG. 3 is provided for purposes of explanation and is not limiting on the techniques as broadly exemplified and described in this disclosure. For purposes of explanation, this disclosure describes video decoder 30 in the context of HEVC coding. However, the techniques of this disclosure may be applicable to other coding standards or methods.

In the example of FIG. 3, video decoder 30 includes a plurality of functional components. The functional components of video decoder 30 include an entropy decoding module 150, a prediction module 152, an inverse quantization module 154, an inverse transform module 156, a reconstruction module 158, a filter module 159, and a decoded picture buffer 160. Prediction module 152 includes a motion compensation module 162 and an intra prediction module 164. In some examples, video decoder 30 may perform a decoding pass generally reciprocal to the encoding pass described with respect to video encoder 20 of FIG. 2. In other examples, video decoder 30 may include more, fewer, or different functional components.

Video decoder 30 may receive a bitstream that comprises encoded video data. The bitstream may include a plurality of syntax elements. When video decoder 30 receives the bitstream, entropy decoding module 150 may perform a parsing operation on the bitstream. As a result of performing the parsing operation on the bitstream, entropy decoding module 150 may extract syntax elements from the bitstream. As part of performing the parsing operation, entropy decoding module 150 may entropy decode entropy encoded syntax elements in the bitstream. Prediction module 152, inverse quantization module 154, inverse transform module 156, reconstruction module 158, and filter module 159 may perform a reconstruction operation that generates decoded video data based on the syntax elements extracted from the bitstream.

As discussed above, the bitstream may comprise a series of NAL units. The NAL units of the bitstream may include sequence parameter set NAL units, picture parameter set NAL units, SEI NAL units, and so on. As part of performing the parsing operation on the bitstream, entropy decoding module 150 may perform parsing operations that extract and entropy decode sequence parameter sets from sequence parameter set NAL units, picture parameter sets from picture parameter set NAL units, SEI data from SEI NAL units, and so on.

In addition, the NAL units of the bitstream may include coded slice NAL units. As part of performing the parsing operation on the bitstream, entropy decoding module 150 may perform parsing operations that extract and entropy decode coded slices from the coded slice NAL units. Each of the coded slices may include a slice header and slice data. The slice header may contain syntax elements pertaining to a slice. The syntax elements in the slice header may include a syntax element that identifies a picture parameter set associated with a picture that contains the slice. Entropy decoding module 150 may perform entropy decoding operations, such as CABAC decoding operations, on syntax elements in the coded slice header to recover the slice header.

As part of extracting the slice data from coded slice NAL units, entropy decoding module 150 may perform parsing operations that extract syntax elements from coded CUs in the slice data. The extracted syntax elements may include syntax elements associated with transform coefficient blocks. Entropy decoding module 150 may then perform CABAC decoding operations on some of the syntax elements.

After entropy decoding module 150 performs a parsing operation on a non-partitioned CU, video decoder 30 may perform a reconstruction operation on the non-partitioned CU. To perform the reconstruction operation on a non-partitioned CU, video decoder 30 may perform a reconstruction operation on each TU of the CU. By performing the reconstruction operation for each TU of the CU, video decoder 30 may reconstruct a residual video block associated with the CU.

As part of performing a reconstruction operation on a TU, inverse quantization module 154 may inverse quantize, i.e., de-quantize, a transform coefficient block associated with the TU. Inverse quantization module 154 may inverse quantize the transform coefficient block in a manner similar to the inverse quantization processes proposed for HEVC or defined by the ITU-T H.264 coding standard. Inverse quantization module 154 may use a quantization parameter QP calculated by video encoder 20 for a CU of the transform coefficient block to determine a degree of quantization and, likewise, a degree of inverse quantization for inverse quantization module 154 to apply.

After inverse quantization module 154 inverse quantizes a transform coefficient block, inverse transform module 156 may generate a residual video block for the TU associated with the transform coefficient block. Inverse transform module 156 may apply an inverse transform to the transform coefficient block in order to generate the residual video block for the TU. For example, inverse transform module 156 may apply an inverse DCT, an inverse integer transform, an inverse Karhunen-Loeve transform (KLT), an inverse rotational transform, an inverse directional transform, or another inverse transform to the transform coefficient block.

In some examples, inverse transform module 156 may determine an inverse transform to apply to the transform coefficient block based on signaling from video encoder 20. In such examples, inverse transform module 156 may determine the inverse transform based on a signaled transform at the root node of a quadtree for a treeblock associated with the transform coefficient block. In other examples, inverse transform module 156 may infer the inverse transform from one or more coding characteristics, such as block size, coding mode, or the like. In some examples, inverse transform module 156 may apply a cascaded inverse transform.

If a PU of the CU was encoded using inter prediction, motion compensation module 162 may generate a candidate list for the PU. The bitstream may include data that identify a position of a selected candidate in the candidate list of the PU. After generating the candidate list for the PU, motion compensation module 162 may generate a predictive video block for the PU based on one or more reference blocks indicated by the motion information of the PU. The reference blocks of the PU may be in different temporal pictures than the PU. Motion compensation module 162 may determine the motion information of the PU based on motion information indicated by the selected candidate in the candidate list of the PU.

In some examples, motion compensation module 162 may refine the predictive video block of a PU by performing interpolation based on interpolation filters. Identifiers for interpolation filters to be used for motion compensation with sub-sample precision may be included in the syntax elements. Motion compensation module 162 may use the same interpolation filters used by video encoder 20 during generation of the predictive video block of the PU to calculate interpolated values for sub-integer samples of a reference block. Motion compensation module 162 may determine the interpolation filters used by video encoder 20 according to received syntax information and use the interpolation filters to produce the predicted video block.

If a PU is encoded using intra prediction, intra prediction module 164 may perform intra prediction to generate a predictive video block for the PU. For example, intra prediction module 164 may determine an intra prediction mode for the PU based on syntax elements in the bitstream. The bitstream may include syntax elements that intra prediction module 164 may use to determine the intra prediction mode of the PU.

In some instances, the syntax elements may indicate that intra prediction module 164 is to use the intra prediction mode of another PU to determine the intra prediction mode of the current PU. For example, it may be probable that the intra prediction mode of the current PU is the same as the intra prediction mode of a neighboring PU. In other words, the intra prediction mode of the neighboring PU may be the most probable mode for the current PU. Hence, in this example, the bitstream may include a small syntax element that indicates that the intra prediction mode of the PU is the same as the intra prediction mode of the neighboring PU. Intra prediction module 164 may then use the intra prediction mode to generate prediction data (e.g., predictive samples) for the PU based on the video blocks of spatially neighboring PUs.

Reconstruction module 158 may use the residual video blocks associated with TUs of a CU and the predictive video blocks of the PUs of the CU, i.e., either intra-prediction data or inter-prediction data, as applicable, to reconstruct the video block of the CU. Thus, video decoder 30 may generate a predictive video block and a residual video block based on syntax elements in the bitstream and may generate a video block based on the predictive video block and the residual video block.

After reconstruction module 158 reconstructs the video block of the CU, filter module 159 may perform one or more filtering operations to improve overall coding quality. Examples of filtering operations performed by filter module 159 may include one or more of deblocking filtering operations, sample adaptive offset filtering operations, and adaptive loop filtering operations. After filter module 159 performs filtering operations, video decoder 30 may store the video block of the CU in decoded picture buffer 160. Decoded picture buffer 160 may provide reference pictures for subsequent motion compensation, intra prediction, and presentation on a display device, such as display device 32 of FIG. 1. For instance, video decoder 30 may perform, based on the video blocks in decoded picture buffer 160, intra prediction or inter prediction operations on PUs of other CUs.

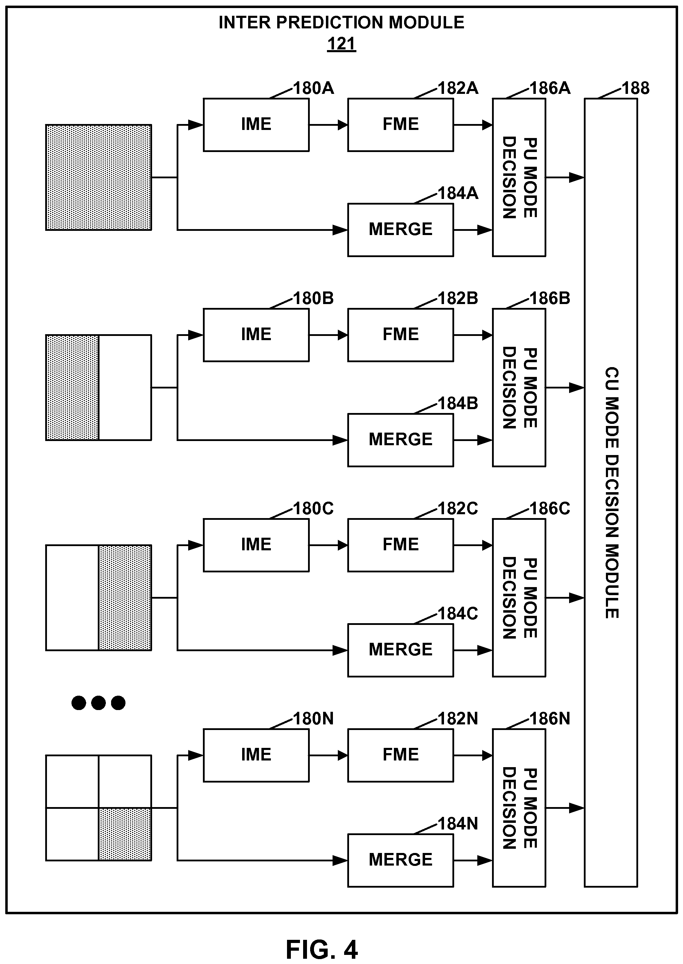

FIG. 4 is a conceptual diagram that illustrates an example configuration of inter prediction module 121. Inter prediction module 121 may partition the current CU into PUs according to multiple partitioning modes. For example, inter prediction module 121 may partition the current CU into PUs according to 2Nx2N, 2NxN, Nx2N, and NxN partitioning modes.

Inter prediction module 121 may perform integer motion estimation (IME) and then perform fractional motion estimation (FME) on each of the PUs. When inter prediction module 121 performs IME on a PU, inter prediction module 121 may search one or more reference pictures for a reference block for the PU. After finding a reference block for the PU, inter prediction module 121 may generate a motion vector that indicates, in integer precision, a spatial displacement between the PU and the reference block for the PU. When inter prediction module 121 performs FME on the PU, inter prediction module 121 may refine the motion vector generated by performing IME on the PU. A motion vector generated by performing FME on a PU may have sub-integer precision (e.g., ½ pixel precision, ¼ pixel precision, etc.). After generating a motion vector for the PU, inter prediction module 121 may use the motion vector for the PU to generate a predictive video block for the PU.

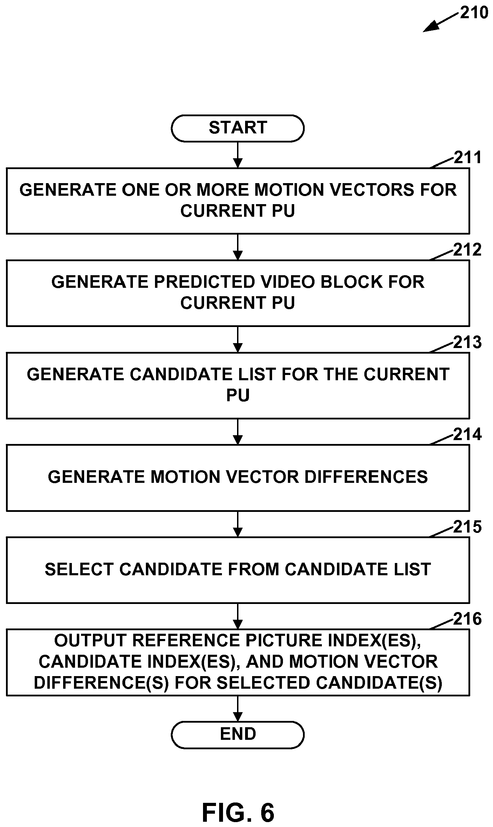

In some examples where inter prediction module 121 signals the motion information of the PU using AMVP mode, inter prediction module 121 may generate a candidate list for the PU. The candidate list may include one or more original candidates and one or more additional candidates that are derived from original candidates. After generating the candidate list for the PU, inter prediction module 121 may select a candidate from the candidate list and generate a motion vector difference (MVD) for the PU. The MVD for the PU may indicate a difference between a motion vector indicated by the selected candidate and the motion vector generated for the PU using IME and FME. In such examples, inter prediction module 121 may output a candidate index that identifies a location in the candidate list of the selected candidate. Inter prediction module 121 may also output the MVD of the PU. FIG. 6, described in detail below, illustrates an example AMVP operation.

In addition to generating motion information for the PUs by performing IME and FME on the PUs, inter prediction module 121 may perform merge operations on each of the PUs. When inter prediction module 121 performs a merge operation on a PU, inter prediction module 121 may generate a candidate list for the PU. The candidate list for the PU may include one or more original candidates and one or more additional candidates that are derived from original candidates. The original candidates in the candidate list may include one or more spatial candidates and a temporal candidate. The spatial candidates may indicate the motion information of other PUs in the current picture. The temporal candidate may be based on motion information of a collocated PU of picture other than the current picture. The temporal candidate may also be referred to as the temporal motion vector predictor (TMVP).

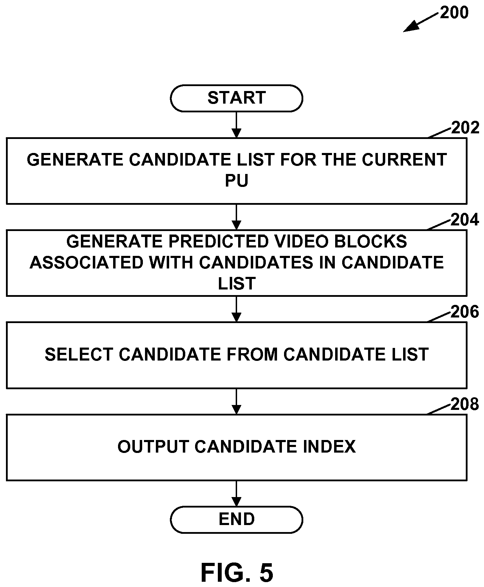

After generating the candidate list, inter prediction module 121 may select one of the candidates from the candidate list. Inter prediction module 121 may, for example, select the candidate from the candidate list to achieve desired reconstructed video quality and/or compression. Inter prediction module 121 may then generate a predictive video block for the PU based on reference blocks indicated by motion information of the PU. In merge mode, the motion information of the PU may be the same as the motion information indicated by the selected candidate. FIG. 5, described below, is a flowchart that illustrates an example merge operation.

After generating a predictive video block for the PU based on IME and FME and after generating a predictive video block for the PU based on a merge operation, inter prediction module 121 may select the predictive video block generated by the FME operation or the predictive video block generated by the merge operation. In some examples, inter prediction module 121 may select a predictive video block for the PU based on a rate / distortion analysis of the predictive video block generated by the FME operation and the predictive video block generated by the merge operation.

After inter prediction module 121 has selected predictive video blocks for the PUs generated by partitioning the current CU according to each of the partitioning modes, inter prediction module 121 may select a partitioning mode for the current CU. In some examples, inter prediction module 121 may select a partitioning mode for the current CU based on a rate / distortion analysis of the selected predictive video blocks for the PUs generated by partitioning the current CU according to each of the partitioning modes. Inter prediction module 121 may output the predictive video blocks associated with PUs belonging to the selected partitioning mode to residual generation module 102. Inter prediction module 121 may output syntax elements indicating the motion information of the PUs belonging to the selected partitioning mode to entropy encoding module 116.

In the example of FIG. 4, inter prediction module 121 includes IME modules 180A-180N (collectively, "IME modules 180"), FME modules 182A-182N (collectively, "FME modules 182"), merge modules 184A-184N (collectively, merge modules 184"), PU mode decision modules 186A-186N (collectively, "PU mode decision modules 186"), and a CU mode decision module 188.

IME modules 180, FME modules 182, and merge modules 184 may perform IME operations, FME operations, and merge operations on PUs of the current CU. The example of FIG. 4 illustrates inter prediction module 121 as including separate IME modules 180, FME modules 182, and merge modules 184 for each PU of each partitioning mode of the CU. In other examples, inter prediction module 121 does not include separate IME modules 180, FME modules 182, and merge modules 184 for each PU of each partitioning mode of the CU.

As illustrated in the example of FIG. 4, IME module 180A, FME module 182A, and merge module 184A may perform an IME operation, an FME operation, and a merge operation on a PU generated by partitioning the CU according to a 2Nx2N partitioning mode. PU mode decision module 186A may select one of the predictive video blocks generated by IME module 180A, FME module 182A, and merge module 184A.

IME module 180B, FME module 182B, and merge module 184B may perform an IME operation, an FME operation, and a merge operation on a left PU generated by partitioning the CU according to an Nx2N partitioning mode. PU mode decision module 186B may select one of the predictive video blocks generated by IME module 180B, FME module 182B, and merge module 184B.

IME module 180C, FME module 182C, and merge module 184C may perform an IME operation, an FME operation, and a merge operation on a right PU generated by partitioning the CU according to an Nx2N partitioning mode. PU mode decision module 186C may select one of the predictive video blocks generated by IME module 180C, FME module 182C, and merge module 184C.

IME module 180N, FME module 182N, and merge module 184 may perform an IME operation, an FME operation, and a merge operation on a bottom right PU generated by partitioning the CU according to an NxN partitioning mode. PU mode decision module 186N may select one of the predictive video blocks generated by IME module 180N, FME module 182N, and merge module 184N.

PU mode decision modules 186 can be configured to select predictive video blocks that produce desired reconstructed video quality and/or desired compression ratios. PU mode decision modules may, for example, select predictive video blocks based on rate-distortion analysis of multiple possible predictive video blocks and select the predictive video block that provides the best rate-distortion tradeoff for a give coding scenario. As one example, for bandwidth limited applications, PU mode decision modules 186 may be biased towards selecting predictive video blocks that increase compression ratios, whereas for other applications, PU mode decision modules 186 may be biased towards selecting predictive video blocks that increase reconstructed video quality. After PU mode decision modules 186 select predictive video blocks for the PUs of the current CU, CU mode decision module 188 selects a partitioning mode for the current CU and outputs predictive video blocks and motion information of the PUs belonging to the selected partitioning mode.

FIG. 5 is a flowchart that illustrates an example merge operation 200. A video encoder, such as video encoder 20, may perform merge operation 200. In other examples, the video encoder may perform merge operations other than merge operation 200. For instance, in other examples, the video encoder may perform a merge operation in which the video encoder performs more, fewer, or different steps than merge operation 200. In other examples, the video encoder may perform the steps of merge operation 200 in different orders or in parallel. The encoder may also perform merge operation 200 on PU encoded in skip mode.

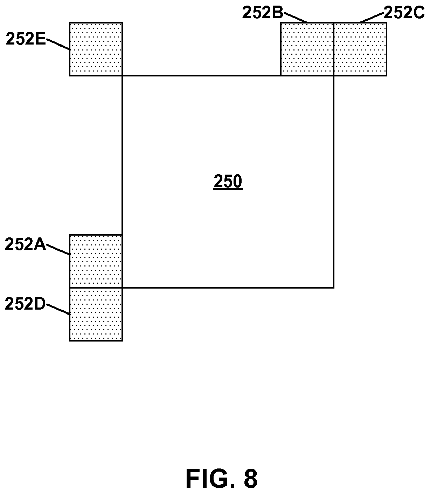

After the video encoder starts merge operation 200, the video encoder may generate a candidate list for the current PU (202). The video encoder may generate the candidate list for the current PU in various ways. For instance, the video encoder may generate the candidate list for the current PU according to one of the example techniques described below with regard to FIGS. 8 through 13B.

As briefly discussed above, the candidate list for the current PU may include a temporal candidate. The temporal candidate may indicate the motion information of a collocated PU. The collocated PU may be spatially collocated with the current PU, but is in a reference picture instead of the current picture. This disclosure may refer to the reference picture that includes the collocated PU as the relevant reference picture. This disclosure may refer to a reference picture index of the relevant reference picture as the relevant reference picture index. As described above, the current picture may be associated with one or more lists of reference pictures, e.g. list 0, list 1, etc. A reference picture index may indicate a reference picture by indicating a position of the reference picture in one of the lists of reference pictures. In some examples, the current picture may be associated with a combined reference picture list.

In some conventional video encoders, the relevant reference picture index is the reference picture index of a PU that covers a reference index source location associated with the current PU. In such conventional video encoders, the reference index source location associated with the current PU is immediately to the left of the current PU or immediately above the current PU. In this disclosure, a PU may "cover" a particular location if the video block associated with the PU includes the particular location. In such conventional video encoders, the video encoder may use a reference picture index of zero if the reference index source location is not available.

However, there may be instances where the reference index source location associated with the current PU is within the current CU. In such instances, the PU covering the reference index source location associated with the current PU may be considered available if this PU is above or to the left of the current CU. However, the video encoder may need to access the motion information of another PU of the current CU in order to determine the reference picture containing the collocated PU. Hence, such video encoders may use the motion information (i.e., the reference picture index) of a PU that belongs to the current CU to generate the temporal candidate for the current PU. In other words, such video encoders may generate the temporal candidate using motion information of a PU that belongs to the current CU. Consequently, the video encoder may be unable to generate candidate lists for the current PU and the PU that covers the reference index source location associated with the current PU in parallel.

In accordance with the techniques of this disclosure, the video encoder may explicitly set, without reference to the reference picture index of any other PU, the relevant reference picture index. This may enable the video encoder to generate candidate lists for the current PU and other PUs of the current CU in parallel. Because the video encoder explicitly sets the relevant reference picture index, the relevant reference picture index is not based on the motion information of any other PU of the current CU. In some examples where the video encoder explicitly sets the relevant reference picture index, the video encoder may always set the relevant reference picture index to a fixed predefined default reference picture index, such as 0. In this way, the video encoder may generate a temporal candidate based on motion information of a collocated PU in a reference frame indicated by a default reference picture index and may include the temporal candidate in the candidate list of the current CU.

In examples where the video encoder explicitly sets the relevant reference picture index, the video encoder may explicitly signal the relevant reference picture index in a syntax structure, such as a picture header, a slice header, an APS, or another syntax structure. In this example, the video encoder may signal the relevant reference picture index for every LCU, CU, PU, TU or other type of sub-block. For instance, the video encoder may signal that the relevant reference picture indexes for each PU of a CU are equal to "1."

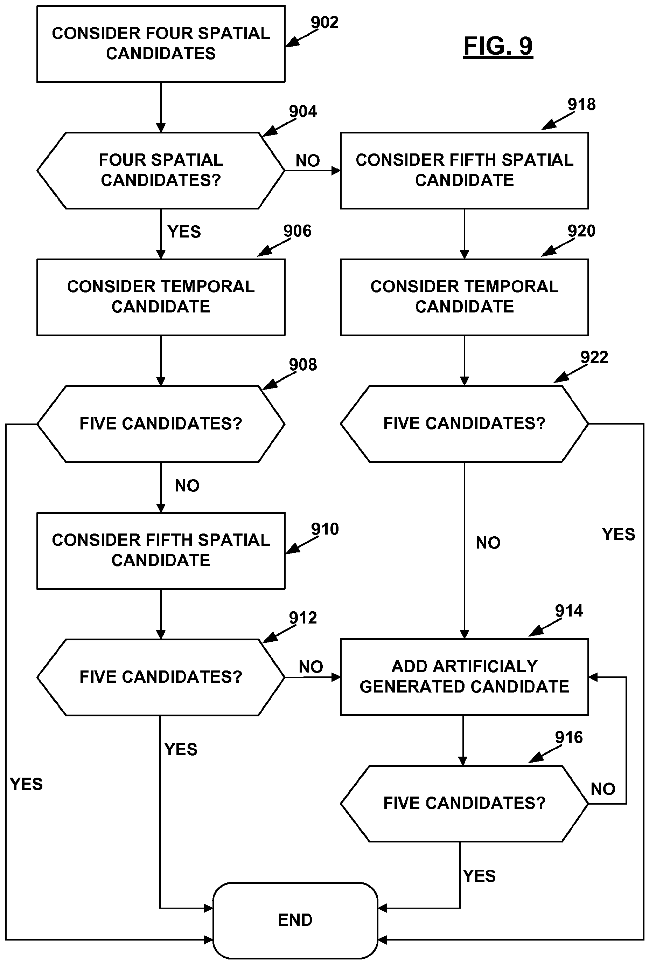

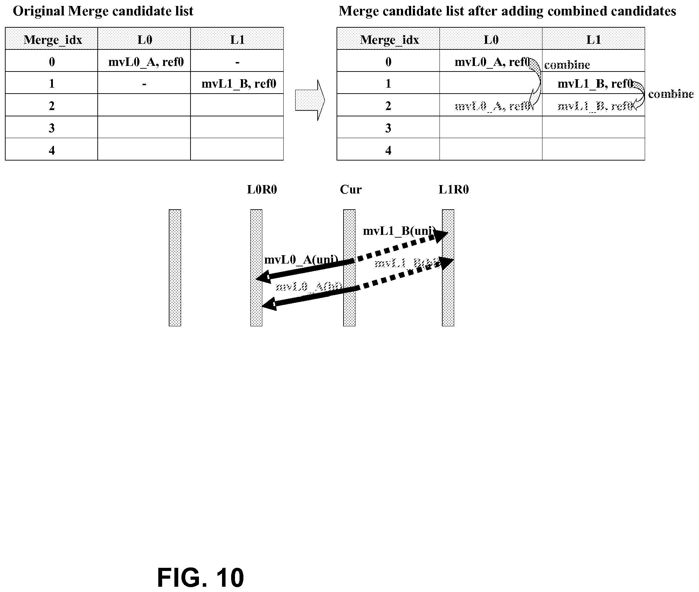

In some examples, such as those described below with reference to FIGs. 9A-9F and 10A-F, the relevant reference picture index may be set implicitly instead of explicitly. In such examples, the video encoder may generate each temporal candidate in the candidate lists for PUs of the current CU using motion information of PUs in reference pictures indicated by reference picture indexes of PUs that cover locations outside the current CU, even if such locations are not strictly adjacent to the current PUs.

After generating the candidate list for the current PU, the video encoder may generate predictive video block associated with the candidates in the candidate list (204). The video encoder may generate a predictive video block associated with a candidate by determining motion information of the current PU based on the motion information of the indicated candidate and then generating the predictive video block based on one or more reference blocks indicated by the motion information of the current PU. The video encoder may then select one of the candidates from the candidate list (206). The video encoder may select the candidate in various ways. For example, the video encoder may select one of the candidates based on a rate/distortion analysis on each of the predictive video blocks associated with the candidates.

After selecting the candidate, the video encoder may output a candidate index (208). The candidate index may indicate a position of the selected candidate in the candidate list. In some examples, the candidate index may be denoted as "merge_idx."

FIG. 6 is a flowchart that illustrates an example AMVP operation 210. A video encoder, such as video encoder 20, may perform AMVP operation 210. FIG. 6 is merely one example of an AMVP operation.

After the video encoder starts AMVP operation 210, the video encoder may generate one or more motion vectors for a current PU (211). The video encoder may perform integer motion estimation and fractional motion estimation to generate the motion vectors for the current PU. As described above, the current picture may be associated with two reference picture lists, list 0 and list 1. If the current PU is uni-directionally predicted, the video encoder may generate a list 0 motion vector or a list 1 motion vector for the current PU. The list 0 motion vector may indicate a spatial displacement between the video block of the current PU and a reference block in a reference picture in list 0. The list 1 motion vector may indicate a spatial displacement between the video block of the current PU and a reference block in a reference picture in list 1. If the current PU is bi-directionally predicted, the video encoder may generate a list 0 motion vector and a list 1 motion vector for the current PU.

After generating the motion vector or motion vectors for the current PU, the video encoder may generate a predictive video block for the current PU (212). The video encoder may generate the predictive video block for the current PU based on one or more reference blocks indicated by the one or more motion vectors for the current PU.

In addition, the video encoder may generate a candidate list for the current PU (213). The video coder may generate the candidate list for the current PU in various ways. For instance, the video encoder may generate the candidate list for the current PU according to one or more of the example techniques described below with regard to FIGS. 8 through 13B. In some examples, when the video encoder generates the candidate list in AMVP operation 210, the candidate list may be limited to two candidates. In contrast, when the video encoder generates the candidate list in a merge operation, the candidate list may include more candidates (e.g., five candidates).

After generating the candidate list for the current PU, the video encoder may generate one or more motion vector differences (MVDs) for each candidate in the candidate list (214). The video encoder may generate a motion vector difference for a candidate by determining a difference between a motion vector indicated by the candidate and a corresponding motion vector of the current PU.

If the current PU is uni-directionally predicted, the video encoder may generate a single MVD for each candidate. If the current PU is bi-directionally predicted, the video encoder may generate two MVDs for each candidate. The first MVD may indicate a difference between a motion vector of the candidate and the list 0 motion vector of the current PU. The second MVD may indicate a difference between a motion vector of the candidate and the list 1 motion vector of the current PU.

The video encoder may select one or more of the candidates from the candidate list (215). The video encoder may select the one or more candidates in various ways. For example, the video encoder may select the candidate that has an associated motion vector that most closely matches the motion vector to be encoded, which may reduce the number of bits required to represent the motion vector difference for the candidate.

After selecting the one or more candidates, the video encoder may output one or more reference picture indexes for the current PU, one or more candidate indexes, and the one or more motion vector differences for the one or more selected candidates (216).

In instances where the current picture is associated with two reference picture lists, list 0 and list 1, and the current PU is uni-directionally predicted, the video encoder may output a reference picture index for list 0 ("ref_idx_10") or list 1 ("ref_idx_l1"). The video encoder may also output a candidate index ("mvp_10_flag") that indicates a position in the candidate list of the selected candidate for the list 0 motion vector of the current PU. Alternatively, the video encoder may output a candidate index ("mvp_l1_flag") that indicates a position in the candidate list of the selected candidate for the list 1 motion vector of the current PU. The video encoder may also output the MVD for the list 0 motion vector or list 1 motion vector of the current PU.

In instances where the current picture is associated with two reference picture lists, list 0 and list 1, and the current PU is bi-directionally predicted, the video encoder may output a reference picture index for list 0 ("ref_idx_10") and a reference picture index for list 1 ("ref_idx_l1"). The video encoder may also output a candidate index ("mvp_10_flag") that indicates a position in the candidate list of the selected candidate for the list 0 motion vector of the current PU. In addition, the video encoder may output a candidate index ("mvp_l1_flag") that indicates a position in the candidate list of the selected candidate for the list 1 motion vector of the current PU. The video encoder may also output the MVD for the list 0 motion vector of the current PU and the MVD for the list 1 motion vector of the current PU.

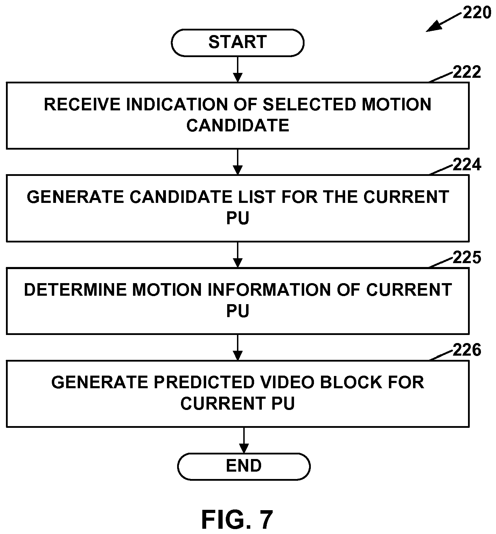

FIG. 7 is a flowchart that illustrates an example motion compensation operation 220 performed by a video decoder, such as video decoder 30. FIG. 7 is merely one example motion compensation operation.

When the video decoder performs motion compensation operation 220, the video decoder may receive an indication of a selected candidate for the current PU (222). For example, the video decoder may receive a candidate index that indicates a position of the selected candidate within a candidate list of the current PU.

If the motion information of the current PU is encoded using AMVP mode and the current PU is bi-directionally predicted, the video decoder may receive a first candidate index and a second candidate index. The first candidate index indicates a position in the candidate list of a selected candidate for a list 0 motion vector of the current PU. The second candidate index indicates a position in the candidate list of a selected candidate for a list 1 motion vector of the current PU. In some examples, a single syntax element may be used to identify both candidate indexes.

In addition, the video decoder may generate a candidate list for the current PU (224). The video decoder may generate such a candidate list for the current PU in various ways. For example, the video decoder may use the techniques described below with reference to FIGs. 8-15 to generate the candidate list for the current PU. When the video decoder generates a temporal candidate for the candidate list, the video decoder may explicitly or implicitly set the reference picture index that identifies the reference picture that includes the collocated PU, as described above with regard to FIG. 5.

After generating the candidate list for the current PU, the video decoder may determine the motion information of the current PU based on motion information indicated by the one or more selected candidates in the candidate list for the current PU (225). For example, if the motion information of the current PU is encoded using merge mode, the motion information of the current PU may be the same as the motion information indicated by the selected candidate. If the motion information of the current PU is encoded using AMVP mode, the video decoder may use the one or more motion vectors indicated by the selected candidate or candidates and the one or more MVDs indicated in the bitstream to reconstruct a motion vector or motion vectors of the current PU. The reference picture index(es) and prediction direction indicator(s) of the current PU may be the same as the reference picture index(es) and prediction direction indicator(s) of the one or more selected candidates. After determining the motion information of the current PU, the video decoder may generate a predictive video block for the current PU based on one or more reference blocks indicated by the motion information of the current PU (226).

The motion information of the neighbor is used relative to the location of the current video block (plus the MVD with AMVP). In other words, the MV of the neighbor refers to motion relative to the neighbor. The MV of the current block refers to motion relative to the current block. So if the current block adopts the neighbors motion information, the adopted MV defines motion relative to the current block (not the neighbor from which it was adopted).

FIG. 8 is a conceptual diagram that illustrates a CU 250 and example candidate locations 252A-E associated with CU 250. This disclosure may refer to candidate locations 252A-252E collectively as candidate locations 252. Candidate locations 252 represent spatial candidates that are in the same picture as CU 250. Candidate location 252A is located to the left of CU 250. Candidate location 252B is located above CU 250. Candidate location 252C is located to the upper-right of CU 250. Candidate location 252D is located to the lower-left of CU 250. Candidate location 252E is located to the above-left of CU 250. FIG. 8 will be used to provide examples of how inter prediction module 121 and motion compensation module 162 may generate candidate lists. The examples below will be explained with reference inter prediction module 121, but it should be understood that motion compensation module 162 may implement the same techniques, and thus generate the same candidate list.

FIG. 9 is a flow chart that illustrates an example method for constructing a candidate list in accordance with the techniques of this disclosure. The techniques of FIG. 9 will be described with reference to a list that includes five candidates, although the techniques described herein may be also be used with lists of other sizes. The five candidates may each have a merge index (e.g. 0 to 4). The techniques of FIG. 9 will be described with reference to a generic video coder. The generic video coder may, for example, be a video encoder such as video encoder 20 or a video decoder such as video decoder 30.

To construct the candidate list according to the example of FIG. 9, a video coder first considers four spatial candidates (902). The four spatial candidates may, for example, include candidate locations 252A, 252B, 252C, and 252D. The four spatial candidates correspond to the motion information of four PUs in the same picture as the current CU (e.g. CU 250). The video coder may consider the four spatial candidates in the list in a specific order. For example, candidate location 252A may be considered first. If candidate location 252A is available, then candidate location 252A may be assigned to merge index 0. If candidate location 252A is unavailable, then the video coder may not include candidate location 252A in the candidate list. A candidate location may be unavailable for various reasons. For example, the candidate location may be unavailable if the candidate location is not within the current picture. In another example, the candidate location may be unavailable if the candidate location is intra-predicted. In another example, the candidate location may be unavailable if the candidate location is in a different slice than the current CU.

After considering candidate location 252A, the video coder can next consider candidate location 252B. If candidate location 252B is both available and different than candidate location 252A, then the video coder may add candidate location 252B to the candidate list. In this particular context, the terms "same" and "different" refer to the motion information associated with the candidate location. Thus, two candidate locations are considered to be the same if they have the same motion information and are considered to be different if they have different motion information. If candidate 252A was not available, then the video coder may assign candidate location 252B to merge index 0. If candidate location 252A was available, then the vide coder may assign candidate location 252 to merge index 1. If candidate location 252B is either not available or is the same as candidate location 252A, then the video coder skips candidate location 252B and does not include it in the candidate list.

Candidate location 252C is similarly considered for inclusion in the list by the video coder. If candidate location 252C is both available and not the same as candidate locations 252B and 252A, then the video coder assigns candidate location 252C to the next available merge index. If candidate location 252C is either unavailable or is not different than at least one of candidate locations 252A and 252B, then the video coder does not include candidate location 252C in the candidate list. Next, candidate location 252D is considered by the video coder. If candidate location 252D is both available and not the same as candidate locations 252A, 252B, and 252C, then the video coder assigns candidate location 252D to the next available merge index. If candidate location 252D is either unavailable or is not different than at least one of candidate locations 252A, 252B, and 252C, then the video coder does not include candidate location 252D in the candidate list. Although the above-example generally describes candidates 252A-D being considered individually for inclusion in the candidate list, in some implementations, all of candidates 252A-D may be first added to the candidate list with duplicates later removed from the candidate list.

After the video coder considers the first four spatial candidates, the candidate list may include four spatial candidates or the list may include fewer than four spatial candidates. If the list includes four spatial candidates (904, yes), then the video coder considers a temporal candidate (906). The temporal candidate may correspond to the motion information of a collocated PU of a picture other than the current picture. If the temporal candidate is both available and different than the first four spatial candidates, then the video coder assigns the temporal candidate to merge index 4. If the temporal candidate is either not available or is the same as one of the first four spatial candidates, then the video coder does not include the temporal candidate in the candidate list. Thus, after the video coder considers the temporal candidate (906), the candidate list may include either five candidates (the first four spatial candidates considered at block 902 and the temporal candidate considered at block 904) or may include four candidates (the first four spatial candidates considered at block 902). If the candidate list includes five candidates (908, yes), then the video coder is finished constructing the list.

If the candidate list includes four candidates (908, no), then the video coder may consider a fifth spatial candidate (910). The fifth spatial candidate may, for example, correspond to candidate location 252E. If the candidate at location 252E is both available and different than candidates at locations 252A, 252B, 252C, and 252D, then the video coder may add the fifth spatial candidate to the candidate list assigned to merge index 4. If the candidate at location 252E is either not available or is not different than one at candidate locations 252A, 252B, 252C, and 252D, then the video coder may not include the candidate at location 252 in the candidate list. Thus after considering the fifth spatial candidate (910), the list may include five candidates (the first four spatial candidates considered at block 902 and the fifth spatial candidate considered at block 910) or may include four candidates (the first four spatial candidates considered at block 902).

If the candidate list includes five candidates (912, yes), then the video coder is finished generating the candidate list. If the candidate list includes four candidates (912, no), then the video coder adds artificially generated candidates (914) until the list includes five candidates (916, yes).

If after the video coder considers the first four spatial candidates, the list includes fewer than four spatial candidates (904, no), then the video coder may consider the fifth spatial candidate (918). The fifth spatial candidate may, for example, correspond to candidate location 252E. If the candidate at location 252E is both available and different than the candidates already included in the candidate list, then the video coder may add the fifth spatial candidate to the candidate list assigned to the next available merge index. If the candidate at location 252E is either not available or is not different than one of the candidates already included in the candidate list, then the video coder may not include the candidate at location 252E in the candidate list. The video coder can then consider a temporal candidate (920). If the temporal candidate is both available and different than the candidates already included in the candidate list, then the video coder may add the temporal candidate to the candidate list assigned to the next available merge index. If the temporal candidate is either not available or is not different than one of the candidates already included in the candidate list, then the video coder may not include the temporal candidate in the candidate list.

If after considering the fifth spatial candidate (block 918) and the temporal candidate (block 920) the candidate list includes five candidates (922, yes), then the video coder is finished generating the candidate list. If the candidate list includes fewer than five candidates (922, no), then the video coder adds artificially generated candidates (914) until the list includes five candidates (916, yes).

According to the techniques of this disclosure, additional merge candidates can be artificially generated following the spatial and temporal candidates to make the size of the merge candidate list fixed to a specified number of the merge candidates, such as five in the example of FIG. 9 above. The additional merge candidates can include, for example, a combined bi-predictive merge candidate (candidate 1), a scaled bi-predictive merge candidate (candidate 2), and zero vector merge/AMVP candidates (candidate 3).

FIG. 10 shows an example of a combined merge candidate. Combined bi-predictive merge candidates can be created by combining original merge candidates. In particular, two candidates of the original candidates, which have mvL0 and refIdxL0 or mvL1 and refldxL1, can be used to create bi-predictive merge candidates. FIG. 10 shows an example of combined bi-predictive merge candidates. In FIG. 10, two candidates are included in an original merge candidates list. The prediction type of one candidate is list 0 uni-predictive, and the other one is list 1 uni-predictive. In this example, mvL0_A and ref0 is picked up from list 0, and mvL1_B and ref0 is picked up from list 1, and then, bi-predictive merge candidate, which has mvL0_A and ref0 in list 0 and mvL1_B and ref0 in list 1, can be created and checked whether it is different than the candidates already included in the candidate list. If it is different, then the video coder may include the bi-predictive merge candidate in the candidate list.

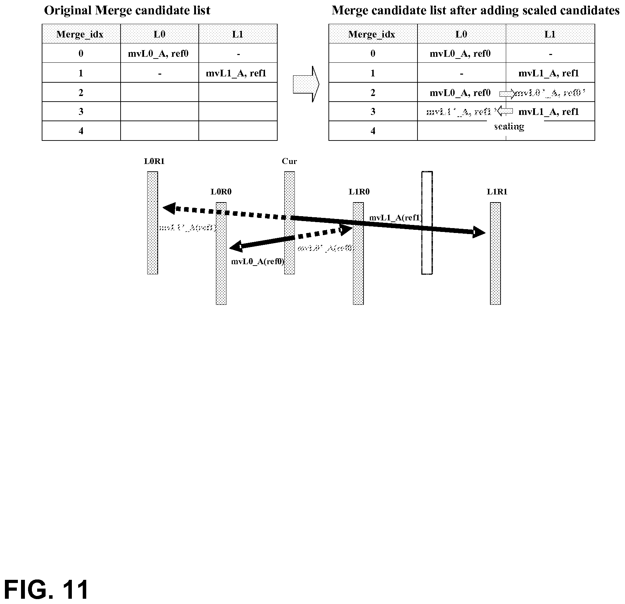

FIG. 11 shows an example of a scaled merge candidate. Scaled bi-predictive merge candidates can be created by scaling original merge candidates. In particular, one candidate from the original candidates, which may have mvLX and refldxLX, may be used to created bi-predictive merge candidates. FIG. 11 shows an example of a scaled bi-predictive merge candidate. In the example of FIG. 11, two candidates are included in an original merge candidates list. A prediction type of one candidate is list 0 uni-predictive, and the other one is list 1 uni-predictive. In this example, mvL0_A and ref0 can be picked up from list 0, and ref0 can be copied to reference index ref0' in list 1. Then, mvL0'_A can be calculated by scaling mvL0_A with ref0 and ref0'. The scaling can be dependent on the POC distance. Then, a bi-predictive merge candidate, which has mvL0_A and ref0 in list 0 and mvL0'_A and ref0' in list 1, can be created and checked whether it is duplicated or not. If it is not duplicated, it can be added to the merge candidates list.

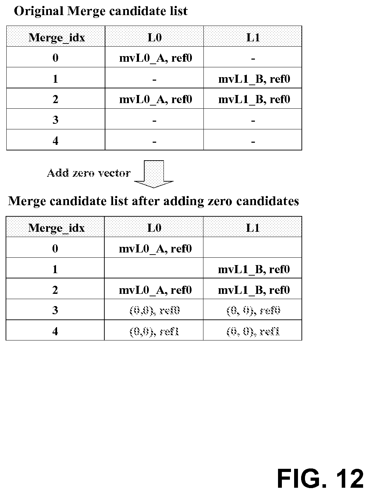

FIG. 12 shows an example of zero vectors merge candidates. Zero vector merge candidates can be created by combining zero vectors and reference indexes which can be referred. FIG. 12 shows an example of zero vectors merge candidates. If zero vector candidates are not duplicated, they can be added to the merge candidates list. For each generated merge candidate, the motion information can be compared with those of the previous candidate in the list. In one example, if the new generated candidate is different from the candidates already included in the candidate list, then the generated candidate is added to the merge candidate list. This process of determining if a candidate is different than the candidates already included in the candidate list is sometimes referred to as pruning. With pruning, each new generated candidate may be compared to existing candidates in the list, which can have a high computational cost. In some instances, a pruning operation may include comparing one or more new candidates to candidates already in a candidate list and not adding new candidates that are duplicates of candidates already in the candidate list. In other instances, a pruning operation may include adding one or more new candidates to a candidate list and later removing duplicate candidates from the list.

The techniques of this disclosure may, in some instances, provide simplification and improvement compared to prior art techniques. The techniques of this disclosure include, in some examples, limiting the pruning operations to combined bi-pred candidates, meaning only the combined bi-pred candidate is compared with the candidates in the list. In such an example, all other candidates (such as a scaled bi-predictive candidate, a zero candidate, and a mv_offset candidate) may not be compared or pruned even if the motion information is the same as some in the list. The techniques of this disclosure may additionally include removing scaled bi-pred candidates and not considering them for inclusion in a candidate list.

According to further techniques of this disclosure, a new candidate (offset candidate) can be added and integrated with a zero candidate to compensate for any possible performance loss brought by the above simplification. Offset candidates can be generated by adding some offset mv to the motion vector of existing merge candidates. The offset mvs that can be added can include, for example, (4, 0), (-4, 0), (0, 4), and (0, -4). These offset values can be added to another motion vector to generate an offset candidate. Other offset values than those shown can also be used.

Table 1 below shows examples of Mv_offset candidates. As the examples shown in Table 1 Table 1, the first two candidates are from the spatial and temporal neighbors. The last three candidates are generated by offsetting the existing candidates.

**Table 1 Mv_offset candidate examples**

| Merge candidate | L0 | L1 | Remark |
|---|---|---|---|
| 0 | mvL0_A, refL0_A | mvL1_A, refL1_A | Existing |
| 1 | mvL0_B, refL0_B | | Existing |
| 2 | mvL0_A+mv_offset(0), refL0_A | mvL1_A-mv_offset(0), refL1_A | Generated |
| 3 | mvL0_B+mv_offset(0), refL0_B | | Generated |
| 4 | mvL0_A+mv_offset(1), refL0_A | mvL1_A-mv_offset(1), refL1_A | Generated |

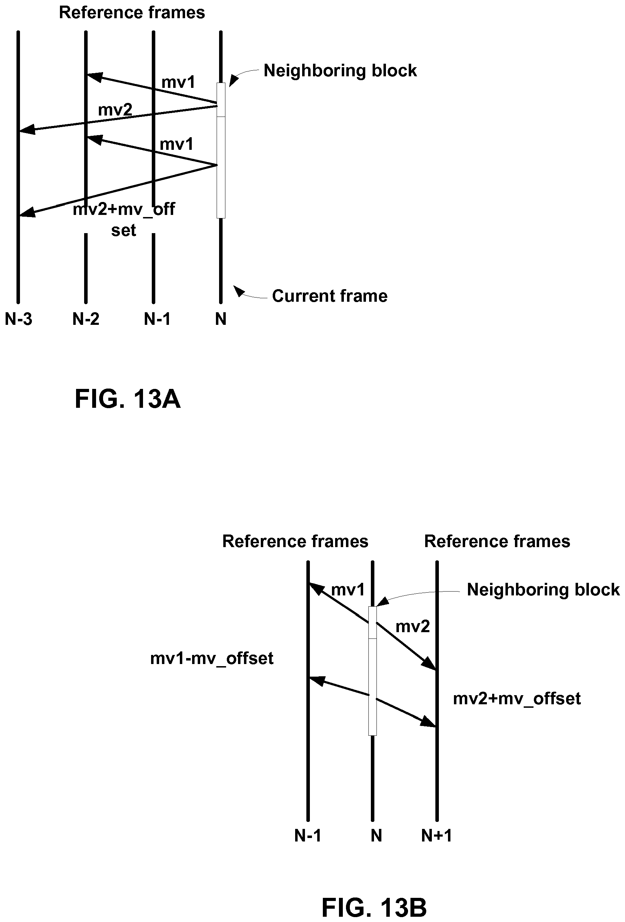

According to the techniques of this disclosure, the procedure for generating the mv_offset candidates can include the following steps:
1. If the existing merge candidate is a uni-pred candidate, the mv_offset candidate based on the existing merge candidate can be generated by adding the offset value to the motion vector of the existing merge candidate and copying the reference index, as shown by merge candidate 3 of Table 1.
2. If the existing merge candidate is a bi-pred candidate, the mv_offset candidate based on the existing merge candidate can be generated by:
   a. If the two reference frames of L0 and L1 are from the same side of the current frame (forward or backward), the mv_offset candidate can be generated by adding an offset value to the motion vector pointing to the farther reference frame away from current frame. *See e.g.* FIG. 13A.
   b. If the two reference frames of L0 and L1 are from different sides of the current frame, the mv_offset candidate can be generated by adding an offset value to the mv from one list and subtracting the same offset value to the mv from the other list. *See e.g.* FIG. 13B.

FIG. 13A shows a graphical example of generating an mv_offset candidates according to step 2(a) above. In FIG. 13A, both reference frames (N-3 and N-2 in this example) are on the same side of the current frame. In FIG. 13A, both reference frames are backwards relative to the current frame, but the same techniques may be used instances when both reference frames are forward relative to the current frame. Reference frame N-2 has associated motion vector mv1, and reference frame N-3 has associated motion vector mv2. To generate the artificial candidate, the mv_offset is added to the motion vector pointing to the farther reference frame, which is mv2 of reference frame N-3 in the example of FIG. 13A. Thus, in the example of FIG. 13A, the artificially generated merge candidate is a bi-predictive candidate with the motion information of reference frame N-2 and motion information (mv2+mv_offset) derived from reference frame N-3

FIG. 13B shows a graphical example of generating an mv_offset candidates according to step 2(b) above. In FIG. 13B, one reference frames (N-1) is backward relative to the current frame, and one reference frame (N+1) is forward relative to the current frame.. Reference frame N-1 has associated motion vector mv1, and reference frame N+1 has associated motion vector mv2. To generate the artificial candidate, the mv_offset is added to the motion vector of one reference frame and subtracted from the motion vector of the other reference frame. Thus, in the example of FIG. 13B, the artificially generated merge candidate is a bi-predictive candidate with motion information derived from reference frame N-1 and motion information derived from reference frame N+1.

According to the techniques of this disclosure, the zero candidates can be integrated into the offset candidates. In such a technique, the zero candidates can be added conditionally before the offset candidates as follows:
- If there is no candidate found in the spatial and temporal neighbors, then mv = (0, 0) refidx = 0 is added before offset candidates.
- If the candidate mv= (0, 0) refidx=0 has already been found in spatial and temporal neighbors, then mv= (0, 0) refidx=1 is added before Offset candidates.

According to additional techniques of this disclosure, the final additional merge candidates can include:
Candidate 1: Combined bi-pred candidate (with pruning operation)
Candidate 2: Offset with zero integrated candidates (without pruning operation) As the candidates in "Candidate 2" do not need pruning, candidates 1 and 2 can be generated in parallel.

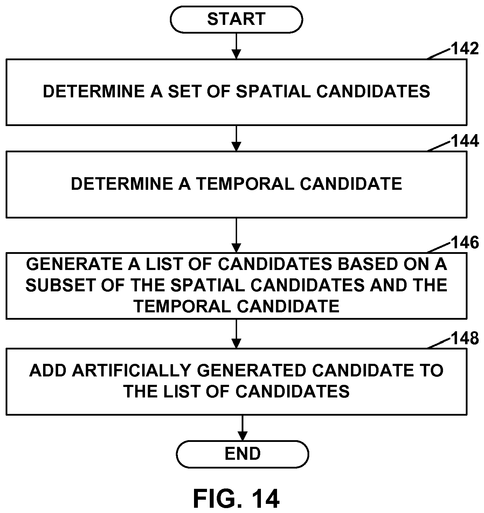

FIG. 14 is a flow chart showing an example of the techniques described in this disclosure. The techniques of FIG. 14 may be performed by a video coder, such as either video encoder 20 or video decoder 30. The video decoder may determine a set of spatial candidates associated with a current portion of a current video frame (142). The set of spatial candidates may correspond to neighboring portions of the current video frame adjacent to the current portion. Each spatial candidate has associated motion information. The video coder may also determine a temporal candidate associated with the current portion of the current video frame (144). The temporal candidate corresponds to a portion of a reference video frame, and the temporal candidate has associated motion information.

Based on a subset of the set of spatial candidates and the temporal candidate, the video coder can generate a list of candidates (146). In response to the candidate list including less than a maximum number of candidates, the video coder may add an artificially generated candidate to the list of candidates (148). The artificially generated candidate may have motion information that is the same as motion information of a spatial candidate of the subset or the temporal candidate. By including in the list of candidates, artificially generated candidates with motion information that is the same as motion information of a candidate already included in the list, coder complexity may be reduced.

The set of spatial candidates may include two or more spatial candidates that have the same motion information, while the subset of spatial candidates includes only one of the two or more spatial candidates. Thus, by removing or pruning the spatial candidates and including more unique candidates, video coding quality as measured by rate-distortion metrics for example, may be improved. The combination of pruning spatial candidates but not pruning artificially generated candidates may offer a desired compromise that provides both good video coding quality with low complexity.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

## Claims

1. A method of coding video data, the method comprising:
determining (142) a set of spatial candidates associated with a current portion of a current video frame, wherein the set of spatial candidates corresponds to neighboring portions of the current video frame adjacent to the current portion and wherein each of the spatial candidates has associated motion information;
determining (144) a temporal candidate associated with the current portion of the current video frame, wherein the temporal candidate corresponds to a portion of a reference video frame and wherein the temporal candidate has associated motion information;
generating (146) a list of candidates based on a subset of the set of spatial candidates and the temporal candidate by excluding a spatial candidate with duplicate motion information from the list of candidates;
in response to the candidate list comprising less than a specified number of candidates, adding (148) artificially generated candidates to the list of candidates until the candidate list comprises the specified number of candidates, wherein the artificially generated candidates include one or more of a combined bi-predictive merge candidate, a scaled bi-predictive merge candidate, and a zero vector merge candidate
wherein the combined bi-predictive merge candidate is created by combining candidates of the list of candidates, the scaled bi-predictive merge candidate is created by scaling candidates of the list of candidates, and the zero vector merge candidate is created by combining zero vectors and reference indexes which can be referred; and
performing a pruning operation by comparing each artificially generated candidate to the existing candidates in the list, wherein the pruning operation is limited to combined bi-predictive merge candidates and all other candidates including scaled bi-predictive merge candidates and zero vector merge candidates are not pruned.

2. The method of claim 1, wherein the set of spatial candidates comprises two or more spatial candidates that have the same motion information, and wherein the subset of spatial candidates includes only one of the two or more spatial candidates.

3. The method of claim 1, further comprising:
coding the current portion of the current video frame using a merge mode, wherein motion information for the merge mode is determined based on the candidate list.

4. The method of claim 1, wherein the method is performed by a video encoder, wherein the method further comprises selecting a candidate from the candidate list and generating an syntax element indicating an index of the selected candidate.

5. The method of claim 1, wherein the method is performed by a video decoder, and wherein the method further comprises receiving a syntax element identifying a candidate from the candidate list and decoding the current portion of the current video frame using motion information of the identified candidate.

6. A device for coding video data, the device comprising:
means for determining a set of spatial candidates associated with a current portion of a current video frame, wherein the set of spatial candidates corresponds to neighboring portions of the current video frame adjacent to the current portion and wherein each of the spatial candidates has associated motion information;
means for determining a temporal candidate associated with the current portion of the current video frame, wherein the temporal candidate corresponds to a portion of a reference video frame and wherein the temporal candidate has associated motion information;
means for generating a list of candidates based on a subset of the set of spatial candidates and the temporal candidate by excluding a spatial candidate with duplicate motion information from the list of candidates;
means for adding artificially generated candidates to the list of candidates in response to the candidate list comprising less than a specified number of candidates until the candidate list comprises the specified number of candidates, wherein the artificially generated candidates include one or more of a combined bi-predictive merge candidate, a scaled bi-predictive merge candidate, and a zero vector merge candidate, wherein the
combined bi-predictive merge candidate is created by combining candidates of the list of candidates, the scaled bi-predictive merge candidate is created by scaling candidates of the list of candidates, and the zero vector merge candidate is created by combining zero vectors and reference indexes which can be referred; and
performing a pruning operation by comparing each artificially generated candidate to the existing candidates in the list wherein the pruning operation is limited to combined bi-predictive merge candidates and all other candidates including scaled bi-predictive merge candidates and zero vector merge candidates are not pruned.

7. The device of claim 6, wherein the set of spatial candidates comprises two or more spatial candidates that have the same motion information, and wherein the subset of spatial candidates includes only one of the two or more spatial candidates.

8. The device of claim 6, further comprising:
means for coding the current portion of the current video frame using a merge mode, wherein motion information for the merge mode is determined based on the candidate list.

9. The device of claim 6, wherein the device comprises a video encoder, and wherein the device further comprises means for selecting a candidate from the candidate list and means for generating an syntax element indicating an index of the selected candidate.

10. The device of claim 6, wherein the device comprises a video decoder, and wherein the device further comprises means for receiving a syntax element identifying a candidate from the candidate list and means for decoding the current portion of the current video frame using motion information of the identified candidate.

11. A computer-readable storage medium storing instructions that when executed cause one or more processors to undertake the method of any of claims 1 to 5.

## Patentansprüche

1. Verfahren zum Codieren von Videodaten, wobei das Verfahren umfasst:
Bestimmen (142) eines Satzes von räumlichen Kandidaten, die einem aktuellen Abschnitt eines aktuellen Videobildes zugeordnet sind, wobei der Satz von räumlichen Kandidaten benachbarten Abschnitten des aktuellen Videobildes entspricht, die zu dem aktuellen Abschnitt benachbart sind, und wobei jeder der räumlichen Kandidaten zugeordnete Bewegungsinformationen aufweist;
Bestimmen (144) eines zeitlichen Kandidaten, der dem aktuellen Abschnitt des aktuellen Videobildes zugeordnet ist, wobei der zeitliche Kandidat einem Abschnitt eines Referenzvideobildes entspricht und wobei der zeitliche Kandidat zugeordnete Bewegungsinformationen aufweist;
Erzeugen (146) einer Liste von Kandidaten auf der Grundlage eines Teilsatzes des Satzes von räumlichen Kandidaten und des zeitlichen Kandidaten, indem ein räumlicher Kandidat mit doppelten Bewegungsinformationen aus der Liste der Kandidaten ausgeschlossen wird;
als Antwort auf die Kandidatenliste, die weniger als eine bestimmte Anzahl von Kandidaten umfasst, Hinzufügen (148) künstlich erzeugter Kandidaten zu der Liste von Kandidaten, bis die Kandidatenliste die festgelegte Anzahl von Kandidaten umfasst, wobei die künstlich erzeugten Kandidaten einen oder mehrere von einem kombinierten biprädiktiven Zusammenführungskandidaten, einen skalierten biprädiktiven Zusammenführungskandidaten und einen Nullvektorzusammenführungskandidaten enthalten,
wobei der kombinierte biprädiktive Zusammenführungskandidat durch Kombinieren von Kandidaten der Liste von Kandidaten erzeugt wird, wobei der skalierte biprädiktive Zusammenführungskandidat durch Skalieren von Kandidaten der Kandidatenliste erzeugt wird und wobei der Nullvektorzusammenführungskandidat durch Kombinieren von Nullvektoren und Referenzindizes, auf die verwiesen werden kann, erzeugt wird; und
Durchführen einer Reduzierungsoperation durch Vergleichen jedes künstlich erzeugten Kandidaten mit den vorhandenen Kandidaten in der Liste, wobei die Reduzierungsoperation auf kombinierte biprädiktive Zusammenführungskandidaten beschränkt ist und alle anderen Kandidaten skalierte biprädiktive Zusammenführungskandidaten enthalten und Nullvektorzusammenführungskandidaten nicht reduziert werden.

2. Verfahren nach Anspruch 1, wobei der Satz räumlicher Kandidaten zwei oder mehr räumliche Kandidaten umfasst, die die gleichen Bewegungsinformationen aufweisen, und wobei der Teilsatz räumlicher Kandidaten nur einen der zwei oder mehr räumliche(n) Kandidaten enthält.

3. Verfahren nach Anspruch 1, ferner umfassend:
Codieren des aktuellen Abschnitts des aktuellen Videobildes unter Verwendung eines Zusammenführungsmodus, wobei Bewegungsinformationen für den Zusammenführungsmodus auf der Grundlage der Kandidatenliste bestimmt werden.

4. Verfahren nach Anspruch 1, wobei das Verfahren von einem Videocodierer ausgeführt wird, wobei das Verfahren ferner das Auswählen eines Kandidaten aus der Kandidatenliste und das Erzeugen eines Syntaxelements umfasst, das einen Index des ausgewählten Kandidaten anzeigt.

5. Verfahren nach Anspruch 1, wobei das Verfahren durch einen Videodecoder ausgeführt wird und wobei das Verfahren ferner das Empfangen eines Syntaxelements, das einen Kandidaten aus der Kandidatenliste ermittelt, und das Decodieren des aktuellen Abschnitts des aktuellen Videobildes unter Verwendung von Bewegungsinformationen des ermittelten Kandidaten umfasst.

6. Vorrichtung zum Codieren von Videodaten, wobei die Vorrichtung umfasst:
ein Mittel zum Bestimmen eines Satzes von räumlichen Kandidaten, die einem aktuellen Abschnitt eines aktuellen Videobildes zugeordnet sind, wobei der Satz von räumlichen Kandidaten benachbarten Abschnitten des aktuellen Videobildes entspricht, die zu dem aktuellen Abschnitt benachbart sind, und wobei jeder der räumlichen Kandidaten zugeordnete Bewegungsinformationen aufweist;
ein Mittel zum Bestimmen eines zeitlichen Kandidaten, der dem aktuellen Abschnitt des aktuellen Videobildes zugeordnet ist, wobei der zeitliche Kandidat einem Abschnitt eines Referenzvideobildes entspricht und wobei der zeitliche Kandidat zugeordnete Bewegungsinformationen aufweist;
ein Mittel zum Erzeugen einer Liste von Kandidaten auf der Grundlage eines Teilsatzes des Satzes von räumlichen Kandidaten und des zeitlichen Kandidaten, indem ein räumlicher Kandidat mit doppelten Bewegungsinformationen aus der Liste der Kandidaten ausgeschlossen wird;
ein Mittel zum Hinzufügen künstlich erzeugter Kandidaten zu der Liste von Kandidaten als Antwort auf die Kandidatenliste, die weniger als eine bestimmte Anzahl von Kandidaten umfasst, bis die Kandidatenliste die festgelegte Anzahl von Kandidaten umfasst, wobei die künstlich erzeugten Kandidaten einen oder mehrere von einem kombinierten biprädiktiven Zusammenführungskandidaten, einen skalierten biprädiktiven Zusammenführungskandidaten und einen Nullvektorzusammenführungskandidaten enthalten, wobei der kombinierte biprädiktive Zusammenführungskandidat durch Kombinieren von Kandidaten der Liste von Kandidaten erzeugt wird,
wobei der skalierte biprädiktive Zusammenführungskandidat durch Skalierung der Kandidaten der Kandidatenliste erzeugt wird, und wobei der Nullvektorzusammenführungskandidat durch Kombinieren von Nullvektoren und Referenzindizes, auf die verwiesen werden kann, erzeugt wird; und
Durchführen einer Reduzierungsoperation durch Vergleichen jedes künstlich erzeugten Kandidaten mit den vorhandenen Kandidaten in der Liste, wobei die Reduzierungsoperation auf kombinierte biprädiktive Zusammenführungskandidaten beschränkt ist und alle anderen Kandidaten skalierte biprädiktive Zusammenführungskandidaten enthalten und Nullvektorzusammenführungskandidaten nicht reduziert werden.

7. Vorrichtung nach Anspruch 6, wobei der Satz von räumlichen Kandidaten zwei oder mehr räumliche Kandidaten umfasst, die die gleiche Bewegungsinformation aufweisen, und wobei der Teilsatz von räumlichen Kandidaten nur einen der zwei oder mehr räumliche(n) Kandidaten enthält.

8. Vorrichtung nach Anspruch 6, ferner umfassend:
ein Mittel zum Codieren des aktuellen Abschnitts des aktuellen Videobildes unter Verwendung eines Zusammenführungsmodus, wobei Bewegungsinformationen für den Zusammenführungsmodus auf der Grundlage der Kandidatenliste bestimmt werden.

9. Vorrichtung nach Anspruch 6, wobei die Vorrichtung einen Videocodierer umfasst, und wobei die Vorrichtung ferner ein Mittel zum Auswählen eines Kandidaten aus der Kandidatenliste und ein Mittel zum Erzeugen eines Syntaxelements umfasst, das einen Index des ausgewählten Kandidaten anzeigt.

10. Vorrichtung nach Anspruch 6, wobei die Vorrichtung einen Videodecoder umfasst, und wobei die Vorrichtung ferner ein Mittel zum Empfangen eines Syntaxelements, das einen Kandidaten aus der Kandidatenliste ermittelt und ein Mittel zum Decodieren des aktuellen Abschnitts des aktuellen Videobildes unter Verwendung von Bewegungsinformationen des ermittelten Kandidaten umfasst.

11. Ein computerlesbares Speichermedium, das Anweisungen speichert, die, wenn sie ausgeführt werden, einen oder mehrere Prozessoren veranlassen, das Verfahren nach einem der Ansprüche 1 bis 5 auszuführen.

## Revendications

1. Procédé de codage de données vidéo, le procédé comprenant :
la détermination (142) d'un ensemble de candidats spatiaux associés à une position actuelle d'une image vidéo actuelle, l'ensemble de candidats spatiaux correspondant aux parties voisines de l'image vidéo actuelle adjacentes à la partie actuelle et chacun des candidats spatiaux ayant des informations associées de mouvement ;
la détermination (144) d'un candidat temporel associé à la position actuelle de l'image vidéo actuelle, le candidat temporal correspondant à une partie d'une image vidéo de référence et le candidat temporel ayant des informations de mouvement qui lui sont associées ;
la production (146) d'une liste de candidats en fonction d'un sous-ensemble de l'ensemble de candidats spatiaux et du candidat temporel par exclusion d'un candidat spatial avec des informations de mouvement dupliqué de la liste de candidats ;
en réponse à la liste de candidats comprenant moins d'un nombre spécifié de candidats, l'ajout (148) de candidats artificiellement produits à la liste de candidats jusqu'à ce que la liste de candidats comprenne le nombre spécifié de candidats, les candidats artificiellement générés comprenant au moins un candidat de fusion biprédictive combinée, un candidat de fusion biprédictive proportionnée et un candidat de fusion de vecteurs nuls ;
le candidat de fusion biprédictive combinée étant créé par combinaison de candidats de la liste de candidats, le candidat de fusion biprédictive étant créé par mise à l'échelle de candidats de la liste de candidats et le candidat de fusion de vecteurs nuls étant créé par combinaison de vecteurs nuls et d'indices de référence auxquels on peut se référer ; et
la réalisation d'une opération d'élagage par comparaison de chaque candidat produit artificiellement aux candidats existants dans la liste, l'opération d'élagage se limitant aux candidats de fusion biprédictive et aucun des autres candidats, y compris les candidats de fusion biprédictive proportionnée et les candidats de fusion de vecteurs nuls, n'étant élagué.

2. Procédé selon la revendication 1, dans lequel l'ensemble de candidats spatiaux comprend au moins deux candidats spatiaux qui ont les mêmes informations de mouvement, et dans lequel le sous-ensemble de candidats spatiaux ne comprend qu'un des au moins deux candidats spatiaux.

3. Procédé selon la revendication 1, comprenant en outre :
le codage de la partie actuelle de l'image vidéo actuelle selon un mode de fusion, les informations de mouvement correspondant au mode de fusion étant déterminées en fonction de la liste de candidats.

4. Procédé selon la revendication 1, le procédé étant effectué par un codeur vidéo, le procédé comprenant en outre la sélection d'un candidat à partir de la liste des candidats et la production d'un élément de syntaxe indiquant un indice du candidat sélectionné.

5. Procédé selon la revendication 1, le procédé étant effectué par un codeur vidéo et le procédé comprenant en outre la réception d'un élément de syntaxe identifiant un candidat à partir de la liste de candidats et le décodage de la partie actuelle de l'image vidéo actuelle selon les informations de mouvement du candidat identifié.

6. Dispositif de codage de données vidéo, le dispositif comprenant :
un moyen de détermination d'un ensemble de candidats spatiaux associés à une partie actuelle d'une image vidéo actuelle, l'ensemble de candidats spatiaux correspondant aux parties voisines de l'image vidéo actuelle adjacente à la partie actuelle et chacun des candidats spatiaux comptant des informations associées de mouvement ;
un moyen de détermination d'un candidat temporel associé à la partie actuelle de l'image vidéo actuelle, le candidat temporel correspondant à une partie d'une image vidéo de référence et le candidat temporel comptant des informations associées de mouvement ;
un moyen de production d'une liste de candidats en fonction d'un sous-ensemble de l'ensemble de candidats spatiaux et du candidat temporel par exclusion d'un candidat spatial comptant des informations doubles de mouvement provenant de la liste de candidats ;
un moyen d'ajout de candidats artificiellement produits à la liste de candidats en réponse au fait que la liste de candidats comprend moins qu'un nombre spécifié de candidats, les candidats artificiellement produits comprenant au moins un candidat de fusion biprédictive combinée, un candidat de fusion biprédictive proportionnée et un candidat de fusion de vecteurs nuls, le candidat de fusion biprédictive combinée étant créé par combinaison de candidats de la liste de candidats, le candidat de fusion biprédictive proportionnée étant créé par mise à l'échelle de candidats de la liste de candidats, et le candidat de fusion de vecteurs nuls étant créé par combinaison de vecteurs nuls et d'indices de référence auxquels on peut se référer ; et
l'exécution d'une opération d'élagage par comparaison de chaque candidat produit aux candidats existants dans la liste, l'opération d'élagage se limitant aux candidats de fusion biprédictive combinée, et aucun des autres candidats, comprenant des candidats de fusion biprédictive proportionnée et des candidats de fusion de vecteurs nuls, n'étant élagué.

7. Dispositif selon la revendication 6, dans lequel l'ensemble de candidats spatiaux comprend au moins deux candidats spatiaux qui ont les mêmes informations de mouvement, et dans lequel le sous-ensemble de candidats spatiaux ne comprend qu'un des au moins deux candidats spatiaux.

8. Dispositif selon la revendication 6, comprenant en outre :
un moyen de codage de la partie actuelle de l'image vidéo actuelle selon un mode de fusion, les informations de mouvement destinées au mode de fusion étant déterminées en fonction de la liste de candidats.

9. Dispositif selon la revendication 6, le dispositif comprenant un codeur vidéo et le dispositif comprenant en outre un moyen de sélection d'un candidat à partir de la liste de candidats et un moyen de production d'un élément de syntaxe indiquant un indice du candidat sélectionné.

10. Dispositif selon la revendication 6, le dispositif comprenant un codeur vidéo et le dispositif comprenant en outre un moyen de réception d'un élément de syntaxe identifiant un candidat à partir de la liste de candidats et un moyen de décodage de la partie actuelle de l'image vidéo actuelle selon les informations de mouvement du candidat identifié.

11. Support d'enregistrement lisible par un ordinateur, enregistrant des instructions qui, quand elles sont exécutées, amènent au moins un processeur à suivre le procédé de l'une quelconque des revendications 1 à 5.
